# EUROPÄISCHE PATENTSCHRIFT

(11) **EP 4 273 077 B1**
(45) Veröffentlichungstag und Bekanntmachung des Hinweises auf die Patenterteilung: **10.12.2025**
(21) Anmeldenummer: 23170540.1
(22) Anmeldetag: 28.04.2023
(51) Int. Cl.: B65G 47/86, B65G 43/00

(54) **VORRICHTUNG ZUM TRANSPORTIEREN VON BEHÄLTERN UND ZUGEHÖRIGES VERFAHREN**
DEVICE FOR TRANSPORTING CONTAINERS AND ASSOCIATED METHOD
DISPOSITIF DE TRANSPORT DE RÉCIPIENTS ET PROCÉDÉ ASSOCIÉ

(30) Priorität: 04.05.2022 DE 102022110939
(43) Veröffentlichungstag der Anmeldung: 08.11.2023
(73) Patentinhaber: KRONES AG, 93073 Neutraubling (DE)
(72) Erfinder: LEIDEL, Marco, 93073 Neutraubling (DE)
(74) Vertreter: v. Bezold & Partner Patentanwälte - PartG mbB

(56) Entgegenhaltungen:
- EP-A1- 1 195 336
- EP-A1- 2 343 255
- WO-A1-2018/162145

## Beschreibung

### Technisches Gebiet

Die Erfindung betrifft eine Vorrichtung zum Transportieren von Behältern und ein Verfahren zum Betreiben einer Vorrichtung zum Transportieren von Behältern.

### Technischer Hintergrund

In Behälterbehandlungsanlagen zum Herstellen, Reinigen, Füllen, Verschließen usw. von Behältern können Behälter mittels Greifer- bzw. Klammervorrichtungen gehalten und durch die Anlage transportiert werden.

Herkömmlich werden Multifunktionsgarnituren in Form von Klammersternen zum Behältertransport in Behälterbehandlungsanlagen mechanisch betätigt. Diese Betätigung geschieht beispielsweise mittels Rollen die per Kurve angesteuert werden. Eine Nockenansteuerung ist ebenfalls möglich. Weiterhin sind für die Haltekrafterzeugung zur Behälterarretierung herkömmlich Federelemente erforderlich. Diese können beispielsweise in die Klammervorrichtungen selbst integriert sein oder durch separate Federn ausgeführt sein.

Nachteile der herkömmlichen Technik können beispielsweise darin liegen, dass mechanische Bauteile, die auf einer rotierenden Achse (Rundläufer) angebracht sind, einem extremen Verschleiß unterliegen. Dieser Verschleiß kommt von dem Betätigungsmechanismus der jeweiligen Variante. Weiterhin ist die Kraft zur Haltekrafterzeugung durch das vordefinierte Federelement einmal ausgelegt und nicht ohne Bauteiltausch zu variieren. Das Variieren erfordert ein aufwändiges Umrüsten. Mit herkömmlichen Lösungen können ebenfalls keine unterschiedlichen Durchmesser an Behältern gegriffen werden. Eingezogene, bauchige, konische etc. Behälter können nur unter großem Aufwand oder gar nicht von Multigarnituren im nicht-zylindrischen Bereich gehalten werden. Konturierte Flaschen werden folglich sehr weit unten gegriffen oder bewusste Fehlgriffe werden in Kauf genommen, was große Auswirkungen auf Produktqualität und Prozesssicherheit hat.

Die EP 1 195 336 A1, welche die Merkmale des Oberbegriffs des Anspruchs 1 offenbart, betrifft eine Vorrichtung zum Indexieren von Glaswaren durch eine Reihe von winklig beabstandeten Stationen umfassend eine erste und eine zweite Anordnung von Glaswaren-Greiffingern, die auf zugehörigen Trägern montiert sind, die sowohl gemeinsam als auch in Bezug aufeinander um eine gemeinsame Achse drehbar sind. Jeder Träger ist mit einem zugehörigen Servomotor verbunden, der wiederum mit einem Steuergerät verbunden ist, um die Träger gegeneinander zu drehen, um Glaswaren zwischen den Fingern zu greifen und freizugeben, und um die Träger gemeinsam zu drehen, um die Glaswaren zwischen den Gerätestationen weiterzuschalten. Das auf den Träger ausgeübte Drehmoment wird durch die Überwachung des auf den Motor ausgeübten Stroms überwacht.

Die DE 10 2014 005 321 A1 offenbart eine Transportvorrichtung zum Transportieren und Handhaben von Behältern, wobei die Behälter von der Transportvorrichtung in einer Transportrichtung von einer Eingabestelle zu einer Ausgabestelle transportiert werden. Die Transportvorrichtung weist wenigstens eine sich in Transportrichtung bewegende Handhabungseinrichtung zur Handhabung eines oder mehrerer der Behälter auf. Die Transporteinrichtung weist wenigstens einen Motor auf, mittels dem die wenigstens eine Handhabungseinrichtung motorisch in einer von der Transportrichtung abweichenden Richtung bewegbar ist.

Der Erfindung liegt die Aufgabe zu Grunde, eine verbesserte Technik zum Transportieren von Behältern zu schaffen, die vorzugsweise eine einfache Überwachung des Transports ermöglicht.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Erfindung betrifft eine Vorrichtung, nach Anspruch 1, zum Transportieren von Behältern für eine Behälterbehandlungsanlage. Die Vorrichtung weist eine Behälterhalterung, vorzugsweise ein Klammerarmpaar, zum Halten eines Behälters auf. Die Vorrichtung weist ferner eine elektrische Antriebseinheit (z. B. Stellantrieb), die zum Betätigen (z. B. Öffnen und/oder Schließen) der Behälterhalterung in Wirkverbindung mit der Behälterhalterung ist, auf. Die Vorrichtung weist ferner eine Verarbeitungseinrichtung auf, die dazu konfiguriert ist, einen elektrischen Betriebsparameter, vorzugsweise eine Stromaufnahme und/oder eine elektrische Leistung, der elektrischen Antriebseinheit zu überwachen. Die Verarbeitungseinrichtung ist ferner dazu konfiguriert, (mindestens) einen Zustand der Behälterhalterung in Abhängigkeit von dem überwachten elektrischen Betriebsparameter der elektrischen Antriebseinheit zu ermitteln.

Vorteilhaft ermöglicht die Vorrichtung ohne externe oder zusätzliche Sensorik zur direkten Überwachung der Behälterhalterung, dass deren Zustand indirekt über die Überwachung des elektrischen Betriebsparameters ermittelt werden kann. Dies kann bspw. zur Erkennung einer Anwesenheit eines Behälters in der Behälterhalterung oder zum sogenannten Condition Monitoring genutzt werden. Dies kann insgesamt eine Reduzierung von ungeplanten Maschinenstillständen ermöglichen, wodurch sich eine Anlagenleistung und Anlagenverfügbarkeit vergrößern lässt. Zudem können mit der elektrischen Antriebseinheit sehr hohe Schaltgeschwindigkeiten erzielt werden, was zu einer höheren Anlagenleistung führt. Mittels der elektrischen Antriebseinheit kann die Behälterhalterung an jeder beliebigen Stelle bzw. zu jedem beliebigen Zeitpunkt geöffnet und geschlossen werden. Dieser Vorteil kann die Übergabe der Behälter optimieren. Es müssen keine Kompromisse durch einmalig eingestellte Ansteuerelemente mehr eingegangen werden. Jeder Behälter kann optimal auf seinen radial besten Übergabepunkt behälterformatabhängig eingestellt werden. Auch können besondere Funktion des Behältertransports, wie bspw. die gezielte Behälterausleitung und das Verteilen der Behälter auf unterschiedliche Anschlussstationen, sehr einfach realisiert werden. Die Haltekraft, mit der der Behälter gehalten wird, kann auf einfache Weise variiert werden. Beispielsweise kann in Abhängigkeit von Gewicht, Größe und Durchmesser ein frei wählbarer Wert für die Haltekraft festgelegt werden. Es kann sich ein schonendes Behälterhandling und ein verringerter Maschinenverschleiß ergeben. Die elektrische Antriebseinheit kann auch verringerte Betriebskosten ermöglichen. Beispielsweise kann sich gegenüber einer pneumatischen Lösung zum Betätigen der Behälterhalterung ein verringerter Ressourcenverbrauch ergeben, da keine (teure) Druckluft benötigt wird. Gegenüber einer rein mechanischen Lösung kann sich eine Verschleißverringerung ergeben.

Bevorzugt kann sich der Begriff "Verarbeitungseinrichtung" auf eine Steuerung (zum Beispiel mit Treiberschaltung oder Mikroprozessor und Datenspeicher) beziehen. Die "Verarbeitungseinrichtung" kann je nach Ausbildung Steuerungsaufgaben und/oder Regelungsaufgaben und/oder Verarbeitungsaufgaben übernehmen. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

In einem Ausführungsbeispiel ist die Verarbeitungseinrichtung dazu konfiguriert, den elektrischen Betriebsparameter der elektrischen Antriebseinheit während eines Betätigens der Behälterhalterung mittels der elektrischen Antriebseinheit zu überwachen und den Zustand der Behälterhalterung in Abhängigkeit von dem während des Betätigens der Behälterhalterung überwachten elektrischen Betriebsparameter der elektrischen Antriebseinheit zu ermitteln. Vorteilhaft kann der elektrischen Betriebsparameter insbesondere während des Betätigens der Behälterhalterung beispielsweise einem besonders charakteristischen Wert oder einen besonders charakteristischen Verlauf annehmen, aus dem auf den Zustand der Behälterhalterung geschlossen werden kann.

Erfindungsgemäß und alternativ oder zusätzlich ist der ermittelte Zustand ein Verschleißzustand und/oder ein Defekt der Behälterhalterung. Vorteilhaft kann der überwachte Betriebsparameter somit für ein sogenanntes Condition Monitoring verwendet werden. Auf diese Weise kann beispielsweise ein Defekt oder ein Verschleiß der Behälterhalterung erkannt und entsprechend reagiert werden. So kann bei einem Defekt beispielsweise die Vorrichtung gestoppt werden, um beispielsweise Folgeschäden zu verhindern oder zumindest zu verringern. Es kann beispielsweise ein sofortiger Notstopp bei Klammerbruch möglich sein. Die Überwachung des elektrischen Betriebsparameters kann zudem flexibler reagieren und schneller sein als eine Überwachung einer Antriebseinheit des gesamten Förderers. Es kann beispielsweise auch ein Verschleiß von Buchsen und Klammern über abweichende Regelwerte festgestellt werden. Klammerbrüche und beschädigte Flaschen können so erkannt werden. Ein Wartungskonzept oder Wartungshinweise der Klammereinheiten kann über abweichende Werte erstellt werden.

In einem weiteren Ausführungsbeispiel gibt der ermittelte Zustand an, ob die Behälterhalterung den Behälter hält oder übernommen hat**.** Erfindungsgemäß und alternativ oder zusätzlich gibt der ermittelte Zustand an, ob die Behälterhalterung bei dem Betätigen einen Leerweg ohne Übernahme des Behälters ausgeführt hat. Vorteilhaft kann damit erkannt werden, ob ein Behälter in der Behälterhalterung ist oder nicht. Hierfür sind insbesondere keine zusätzlichen Sensoren zur Behältererkennung mehr nötig. Die Verarbeitungseinrichtung kann den Behälter bspw. über die aufgewendete Kraft bzw. Stromaufnahme erkennen.

In einer Ausführungsform ist die Verarbeitungseinrichtung ferner dazu konfiguriert, ein Merkmal, vorzugsweise eine Abmessung (z. B. Behälterdurchmesser oder Behälterbreite) und/oder ein Gewicht des Behälters in Abhängigkeit von dem überwachten elektrischen Betriebsparameter der elektrischen Antriebseinheit zu ermitteln.

In einer weiteren Ausführungsform weist die Vorrichtung ferner eine (zum Beispiel optische, akustische und/oder haptische) Ausgabeeinrichtung zum Ausgeben von Informationen an einen Benutzer auf. Die Verarbeitungseinrichtung kann ferner dazu konfiguriert sein, die Ausgabeeinrichtung zum Ausgeben einer Information, die den ermittelten Zustand (und optional das ermittelte Merkmal des Behälters) angibt, zu steuern.

In einer weiteren Ausführungsform ist die Verarbeitungseinrichtung ferner dazu konfiguriert, die elektrische Antriebseinheit in Abhängigkeit von dem ermittelten Zustand und (optional dem ermittelten Merkmal des Behälters) zu betreiben.

In einer Ausführungsvariante ist eine Haltekraft, ein Öffnungszeitpunkt, ein Schließzeitpunkt und/oder ein Verstellweg der Behälterhalterung mittels der elektrischen Antriebseinheit variabel verstellbar, vorzugsweise automatisch mittels der Verarbeitungseinrichtung in Abhängigkeit von dem überwachten elektrischen Betriebsparameter.

In einer weiteren Ausführungsvariante ist die Verarbeitungseinrichtung dazu konfiguriert, die elektrische Antriebseinheit in unterschiedlichen Modi zu betreiben. Vorzugsweise können sich die unterschiedlichen Modi zumindest teilweise in Bezug auf eine Haltekraft, einen Öffnungszeitpunkt, einen Schließzeitpunkt und/oder einen Verstellweg der Behälterhalterung unterscheiden. Alternativ oder zusätzlich sind die unterschiedlichen Modi zum Halten unterschiedlicher Behälter konfiguriert, wobei sich die unterschiedlichen Behälter in Bezug auf ein Behältergewicht, eine Behältergröße, eine Behälterform, einen Behälterdurchmesser und/oder ein Behältermaterial unterscheiden. Vorteilhaft können die unterschiedlichen Modi das herkömmlich notwendige, aufwendige Umrüsten usw. ersetzen und damit insgesamt eine erhöhte Leistung ermöglichen und einen flexiblen Betrieb fördern. Vorteilhaft können die unterschiedlichen Modi beispielsweise vorgegebene Funktionen des Behältertransports ermöglichen, wie beispielsweise das Transportieren unterschiedlicher Behälter, eine gezielte Ausleitung von bestimmten Behältern und/oder das Verteilen der Behälter auf unterschiedliche Anschlussstationen.

In einer weiteren Ausführungsvariante weist die Vorrichtung ferner eine weitere Behälterhalterung, vorzugsweise ein weiteres Klammerarmpaar, auf, wobei die Behälterhalterung und die weitere Behälterhalterung zum gleichzeitigen Halten des Behälters übereinander angeordnet sind (z. B. doppelstöckig). Optional kann die Vorrichtung eine weitere elektrische Antriebseinheit (z. B. Stellantrieb), die zum Betätigen (z. B. Öffnen und/oder Schließen) der weiteren Behälterhalterung in Wirkverbindung mit der weiteren Behälterhalterung ist, aufweisen. Alternativ kann die weitere Behälterhalterung beispielsweise mittels der elektrischen Antriebseinheit betätigbar sein. Vorzugsweise kann die Verarbeitungseinrichtung ferner dazu konfiguriert sein, einen elektrischen Betriebsparameter, vorzugsweise eine Stromaufnahme und/oder eine elektrische Leistung, der weiteren elektrischen Antriebseinheit zu überwachen, vorzugsweise während eines Betätigens der weiteren Behälterhalterung, und einen Zustand der weiteren Behälterhalterung in Abhängigkeit von dem überwachten elektrischen Betriebsparameter der weiteren elektrischen Antriebseinheit zu ermitteln. Vorteilhaft können mit zwei unabhängig angetriebenen Behälterhalterungen auch konturierte Behälter (Konturbehälter) sicher gegriffen und gehalten werden.

In einem Ausführungsbeispiel ist die Verarbeitungseinrichtung ferner dazu konfiguriert, den Zustand der Behälterhalterung und/oder den Zustand der weiteren Behälterhalterung in Abhängigkeit von einem Vergleich zwischen dem überwachten elektrischen Betriebsparameter der elektrischen Antriebseinheit und dem überwachten elektrischen Betriebsparameter der weiteren elektrischen Antriebseinheit zu ermitteln.

In einem weiteren Ausführungsbeispiel ist die Vorrichtung als ein (z. B. Rundlauf- oder Linear-) Förderer, vorzugsweise ein drehbarer Klammerstern, ausgeführt, vorzugsweise mit einem Schleifringübertrager, der mit der elektrischen Antriebseinheit elektrisch verbunden. Die Verarbeitungseinrichtung kann dazu konfiguriert sein, den Förderer (z. B. sofort) anzuhalten, wenn der ermittelte Zustand der Behälterhalterung einen Defekt der Behälterhalterung oder einen bevorstehenden Defekt (z. B. aufgrund des ermittelten Verschleißzustands) angibt.

In einem weiteren Ausführungsbeispiel ist die Verarbeitungseinrichtung ferner dazu konfiguriert, den Förderer in Abhängigkeit von dem ermittelten Zustand der Behälterhalterung zu betreiben, und/oder die elektrische Antriebseinheit in Abhängigkeit von einer, vorzugsweise aktuellen, Leistung des Förderers zu betreiben, vorzugsweise zum Anpassen einer Haltekraft, eines Öffnungszeitpunkts, eines Schließzeitpunkts und/oder eines Verstellwegs der Behälterhalterung in Abhängigkeit von der Leistung des Förderers. Vorteilhaft kann damit bspw. eine Übergabe und ein Halten der Behälter in Abhängigkeit vom Behälterformat optimiert werden. Allgemein kann ein vollflexibler Betrieb der Behälterhalterung ermöglicht werden.

Vorzugsweise kann die Behälterbehandlungsanlage zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel ausgeführt sein.

Beispielsweise können die Behälter als Flaschen, Dosen, Kanister, Kartons, Flakons usw. ausgeführt sein.

Vorzugsweise sind die elektrische Antriebseinheit und die weitere elektrische Antriebseinheit unabhängig voneinander betreibbar. Vorteilhaft kann damit eine unabhängige Bewegung der Behälterhalterungen ermöglicht werden, was bspw. zum sicheren und verschleißarmen Transportieren von Konturbehältern genutzt werden kann.

Bevorzugt ist die Wirkverbindung zwischen der elektrischen Antriebseinheit und der Behälterhalterung, die Wirkverbindung zwischen der weiteren elektrischen Antriebseinheit und der weiteren Behälterhalterung, die elektrische Antriebseinheit und/oder die weitere elektrische Antriebseinheit ohne ein elastisches Federelement ausgebildet. Vorteilhaft kann damit eine konstruktiv einfache und hygienische Ausführung der Vorrichtung ermöglicht werden, da es möglich ist, auf Federelemente zu verzichten.

Vorzugsweise weist die Vorrichtung ferner einen, vorzugsweise im Wesentlichen blockförmigen und/oder länglichen, Träger (z. B. Klammerträger) auf, der die Behälterhalterung und/oder die weitere Behälterhalterung bewegbar, vorzugsweise verschiebbar oder schwenkbar, trägt, besonders bevorzugt an einander entgegengesetzten Endbereichen des Trägers (zum Beispiel an einem oberen Endbereich und an einem unteren Endbereich des Trägers). Vorzugsweise kann der Träger hochkant orientiert sein.

Besonders bevorzugt ist die elektrische Antriebseinheit und/oder die weitere elektrische Antriebseinheit von dem Träger getragen, vorzugsweise an einer Rückseite des Trägers, die entgegengesetzt zu einer Vorderseite des Trägers ist, die dem von der Behälterhalterung und/oder der weiteren Behälterhalterung haltbaren Behälter zugewandt ist. Vorteilhaft kann die elektrische Antriebseinheit und/oder die weitere elektrische Antriebseinheit derart an der Rückseite des Trägers angeordnet sein, dass diese von Behälterbruchstücken im Falle eines Behälterbruchs durch den Träger geschützt ist.

Vorzugsweise sind die Behälterhalterung und die weitere Behälterhalterung unabhängig voneinander bewegbar, vorzugsweise verschiebbar oder schwenkbar (z. B. koaxial).

Bevorzugt sind die Behälterhalterung und die weitere Behälterhalterung baugleich und/oder im Wesentlichen spiegelsymmetrisch bezüglich einer Horizontalebene ausgebildet.

Beispielsweise können die elektrische Antriebseinheit und die weitere elektrische Antriebseinheit übereinander angeordnet, baugleich, im Wesentlichen spiegelsymmetrisch bezüglich einer Horizontalebene ausgebildet und/oder von einem Träger der Vorrichtung getragen sein.

Vorzugsweise kann die elektrische Antriebseinheit und/oder die weitere elektrische Antriebseinheit ein verschiebbares Ausgabeelement aufweisen.

Besonders bevorzugt kann eine lineare Vorschub- und Rückschubbewegung des Ausgabeelements der elektrischen Antriebseinheit durch ein Kniehebelgelenk in eine Schwenkbewegung der Behälterhalterung umgewandelt werden. Alternativ oder zusätzlich kann eine lineare Vorschub- und Rückschubbewegung des Ausgabeelements der weiteren elektrischen Antriebseinheit durch ein Kniehebelgelenk in eine Schwenkbewegung der weiteren Behälterhalterung umgewandelt werden.

Es ist möglich, dass ein Ausgabeelement der elektrischen Antriebseinheit und/oder ein mit dem Ausgabeelement verbundenes Übertragungselement sich verschiebbar durch einen Träger der Vorrichtung erstreckt. Alternativ oder zusätzlich kann sich ein Ausgabeelement der weiteren elektrischen Antriebseinheit und/oder ein mit dem Ausgabeelement verbundenes Übertragungselement verschiebbar durch einen Träger der Vorrichtung erstrecken.

Vorzugsweise weist die als Klammerarmpaar ausgeführte Behälterhalterung zwei, vorzugsweise miteinander gekoppelte, Klammerarme zum Anlegen an den Behälter auf, die vorzugsweise gegensinnig zueinander bewegbar, bevorzugt schwenkbar oder verschiebbar, sind. Alternativ oder zusätzlich weist die als weiteres Klammerarmpaar ausgeführte weitere Behälterhalterung zwei weitere, vorzugsweise miteinander gekoppelte, Klammerarme zum Anlegen an den Behälter auf, die vorzugsweise gegensinnig zueinander (und bspw. unabhängig von den zwei Klammerarmen) bewegbar, bevorzugt schwenkbar oder verschiebbar sind (z. B. koaxial schwenkbar zu den zwei Klammerarmen).

Bevorzugt weist die Vorrichtung ferner zwei Schwenkarme, die V-förmig angeordnet, in Reaktion auf eine mechanische Eingabe mittels der elektrischen Antriebseinheit hin- und herverschiebbar und/oder an je einem Klammerarm des Klammerarmpaares schwenkbar angebracht sind, auf. Alternativ oder zusätzlich weist die Vorrichtung ferner zwei weitere Schwenkarme auf, die V-förmig angeordnet, in Reaktion auf eine mechanische Eingabe mittels der weiteren elektrischen Antriebseinheit hin- und herverschiebbar und/oder an je einem Klammerarm des weiteren Klammerarmpaares schwenkbar angebracht sind.

Vorzugsweise sind die Schwenkarme, vorzugsweise koaxial, schwenkbar an einem verschiebbaren Übertragungselement angebracht, das in einem Träger der Vorrichtung verschiebbar gelagert ist, stangenförmig ist und/oder von der elektrischen Antriebseinheit verschiebbar ist. Alternativ oder zusätzlich sind die zwei weiteren Schwenkarme, vorzugsweise koaxial, schwenkbar an einem verschiebbaren weiteren Übertragungselement angebracht, das in einem Träger der Vorrichtung verschiebbar gelagert ist, stangenförmig ist und/oder von der weiteren elektrischen Antriebseinheit verschiebbar ist.

Bevorzugt kann ein Ausgabeelement der elektrischen Antriebseinheit mit dem Übertragungselement (z. B. direkt) verbunden sein, z. B. aneinander befestigt oder integral-einstückig miteinander ausgebildet. Alternativ oder zusätzlich kann ein Ausgabeelement der weiteren elektrischen Antriebseinheit mit dem weiteren Übertragungselement (z. B. direkt) verbunden sein, z. B. aneinander befestigt oder integral-einstückig miteinander ausgebildet.

Ein weiterer Aspekt der vorliegenden Erfindung betrifft ein Verfahren, nach Anspruch 12, zum Betreiben einer Vorrichtung (z. B. wie hierin offenbart) zum Transportieren von Behältern für eine Behälterbehandlungsanlage. Das Verfahren weist ein Betätigen einer Behälterhalterung, vorzugsweise eines Klammerarmpaares, mittels einer elektrischen Antriebseinheit zum Halten eines Behälters auf. Das Verfahren weist ferner ein Überwachen eines elektrischen Betriebsparameters, vorzugsweise einer

Stromaufnahme und/oder einer elektrischen Leistung, der elektrischen Antriebseinheit, vorzugsweise während des Betätigens, mittels einer Verarbeitungseinrichtung, auf. Das Verfahren weist ferner ein Ermitteln (mindestens) eines Zustands der Behälterhalterung in Abhängigkeit von dem Überwachen des elektrischen Betriebsparameters der elektrischen Antriebseinheit mittels der Verarbeitungseinrichtung auf. Vorteilhaft können mit dem Verfahren die gleichen Vorteile erzielt werden, die bereits unter Bezugnahme auf die Vorrichtung beschrieben wurden.

In einem weiteren Ausführungsbeispiel weist das Verfahren ferner ein Ausgeben des ermittelten Zustands mittels einer Ausgabeeinrichtung auf. Alternativ oder zusätzlich weist das Verfahren ferner ein Anhalten (z. B. Notstoppen) der Vorrichtung, wenn der ermittelte Zustand einen Defekt der Behälterhalterung oder einen Verschleißzustand der Behälterhalterung, der eine Wartung erforderlich macht, angibt, mittels der Verarbeitungseinrichtung auf. Alternativ oder zusätzlich weist das Verfahren ferner ein Betreiben der Vorrichtung in Abhängigkeit von dem ermittelten Zustand mittels der Verarbeitungseinrichtung auf. Alternativ oder zusätzlich weist das Verfahren ferner ein Anpassen einer Haltekraft, eines Öffnungszeitpunkts, eines Schließzeitpunkts und/oder eines Verstellwegs der Behälterhalterung mittels der Verarbeitungseinrichtung in Abhängigkeit von dem überwachten elektrischen Betriebsparameter und/oder in Abhängigkeit von einer Leistung der als Förderer ausgebildeten Vorrichtung auf. Alternativ oder zusätzlich weist das Verfahren ferner ein Ermitteln eines Merkmals, vorzugweise einer Abmessung (z. B. Behälterdurchmesser oder Behälterbreite) und/oder eines Gewichts, des Behälters in Abhängigkeit von dem Überwachen des elektrischen Betriebsparameters der elektrischen Antriebseinheit mittels der Verarbeitungseinrichtung auf.

Erfindungsgemäß ist der ermittelte Zustand ein Verschleißzustand und/oder ein Defekt der Behälterhalterung. Alternativ oder zusätzlich kann der ermittelte Zustand angeben, ob die Behälterhalterung den Behälter hält oder übernommen hat. Alternativ oder zusätzlich gibt der ermittelte Zustand an, ob die Behälterhalterung bei dem Betätigen einen Leerweg (z. B. eine Leergreifbewegung) ohne Übernahme eines Behälters ausgeführt hat.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht einer Vorrichtung gemäß einem Ausführungsbeispiel der vorliegenden Offenbarung;
- Figur 2: eine Schnittansicht durch die beispielhafte Vorrichtung von Figur 1;
- Figur 3: eine Draufsicht auf die beispielhafte Vorrichtung von Figur 1;
- Figur 4: eine perspektivische Ansicht einer Vorrichtung gemäß einem Ausführungsbeispiel der vorliegenden Offenbarung;
- Figur 5: eine Schnittansicht durch die beispielhafte Vorrichtung von Figur 4; und
- Figur 6: eine Ansicht von unten auf die beispielhafte Vorrichtung von Figur 4.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

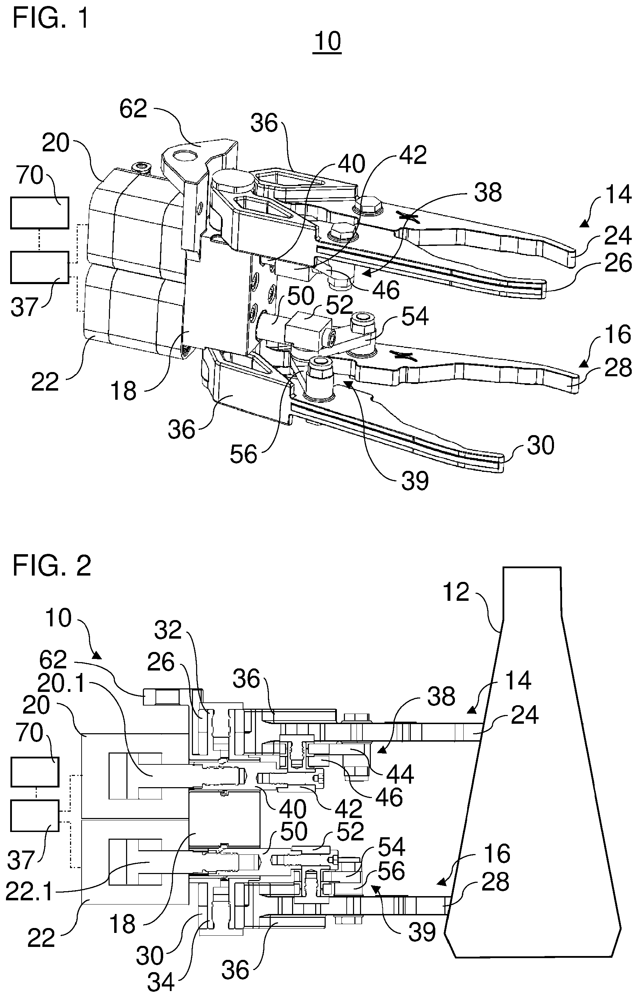

Die Figuren 1 bis 3 zeigen eine Vorrichtung 10 zum Transportieren von Behältern 12 in unterschiedlichen Ansichten. Die Vorrichtung 10 kann einen Behälter 12 (nur in Figur 2 schematisch dargestellt) halten bzw. greifen. Der Behälter 12 kann einen Behälterkörper mit unterschiedlichen Außenumfängen entlang seiner Länge bzw. Höhe aufweisen. Beispielsweise kann der Behälter 12 als ein sogenannter Konturbehälter ausgeführt sein. Es ist auch möglich, dass der Behälterkörper des Behälters 12 eine andere Form aufweist, z. B eine zylindrische Form.

Die Vorrichtung 10 weist eine Behälterhalterung 14 zum Halten des Behälters 12 auf. Die Vorrichtung 10 weist ferner eine elektrische Antriebseinheit 20 und eine Verarbeitungseinrichtung 37 auf. Optional kann die Vorrichtung 10 zudem eine weitere Behälterhalterung 16, eine weitere elektrische Antriebseinheit 22 und/oder einen Träger 18 aufweisen.

Beispielsweise ist die Vorrichtung 10 als eine Klammervorrichtung ausgeführt, wobei die Behälterhalterung 14 bevorzugt als ein Klammerarmpaar ausgeführt ist. Es ist allerdings möglich, dass die Behälterhalterung 14 eine davon abweichende Konstruktion aufweist, solange sie den Behälter 12 mittels Betätigung durch die elektrische Antriebseinheit 20 halten und/oder freigeben kann.

Besonders bevorzugt ist die Vorrichtung 10 als eine Doppel-Klammervorrichtung bzw. eine doppelstöckige Klammervorrichtung ausgeführt. Bei der Doppel-Klammervorrichtung können beide Behälterhalterungen 14 und 16 jeweils als ein Klammerarmpaar ausgeführt sein. Es ist allerdings auch möglich, dass die Vorrichtung 10 weitere Klammerarmpaare (nicht dargestellt) oder bspw. nur ein Klammerarmpaar oder eine anders konstruierte Behälterhalterung 14 aufweist.

Auch wenn nachfolgend insbesondere das Ausführungsbeispiel mit den zwei Behälterhalterungen 14, 16 erläutert ist, so ist darauf hinzuweisen, dass die Ausführungen bezüglich der Behälterhalterung 14 auch für Ausführungsformen gelten können, in der die weitere Behälterhalterung 16 nicht umfasst ist. Selbiges gilt für Ausführungsformen, in denen lediglich die elektrische Antriebseinheit 20, nicht aber die weitere elektrische Antriebseinheit 22 vorhanden ist.

Die Behälterhalterung 14 kann zwei Klammerarme 24, 26 aufweisen. Die weitere Behälterhalterung 16 kann zwei weitere Klammerarme 28, 30 aufweisen. Die Klammerarme 24 und 26 (bzw. 28 und 30) können separat ausgebildet sein, wie in den Figuren 1 und 2 dargestellt ist. Es ist möglich, dass die Klammerarme 24 und 26 (bzw. 28 und 30) integral-einstückig miteinander ausgebildet sind. Es ist auch möglich, dass weitere Klammerarme umfasst sind.

Vorzugsweise kann die weitere Behälterhalterung 16 im Wesentlichen baugleich und/oder funktionsgleich zu der Behälterhalterung 14 ausgeführt sein. Bevorzugt sind die Behälterhalterung 14 und die weitere Behälterhalterung 16 im Wesentlichen spiegelsymmetrisch bezüglich einer Mittellängsebene der Vorrichtung 10 bzw. bezüglich einer Horizontalebene (im montierten Zustand) ausgebildet. Die Mittellängsebene teilt die Vorrichtung 10 auf halber Höhe und kann bspw. parallel zu Längsachsen oder Ausrichtungsebenen der Behälterhalterungen 14, 16 verlaufen.

Die Behälterhalterung 14 kann schwenkbar gelagert sein, wie dargestellt ist. Die weitere Behälterhalterung 16 kann schwenkbar gelagert sein. Die schwenkbare Lagerung ist bevorzugt an einem Ende der Behälterhalterung 14 bzw. 16 entgegengesetzt zu dem Behälter 12 bzw. den freien Enden der Behälterhalterung 14 bzw. 16 angeordnet. Die Behälterhalterungen 14, 16 können bevorzugt koaxial zueinander verschwenkbar sein bzw. um eine gemeinsame Schwenkachse schwenkbar sein. Es ist allerdings auch möglich, dass die Behälterhalterung 14 und/oder 16 verschiebbar gelagert ist.

Im Einzelnen können die Klammerarme 24, 26 bevorzugt gegensinnig zueinander bewegbar, vorzugsweise schwenkbar (wie dargestellt) oder verschiebbar sein. Die weiteren Klammerarme 28, 30 können gegensinnig zueinander bewegbar, vorzugsweise schwenkbar (wie dargestellt) oder verschiebbar, sein. Zum Halten des Behälters 12 können die Klammerarme 24, 26 bis zum Anlegen an den Behälter 12 zueinander bewegt (z. B geschwenkt oder verschoben) werden. Die weiteren Klammerarme 28, 30 können bis zum Anlegen an den Behälter 12 zueinander bewegt (z. B. geschwenkt oder verschoben) werden. Zum Freigeben des Behälters 12 können die Klammerarme 24, 26 voneinander wegbewegt (z.B. weggeschwenkt oder wegverschoben) werden. Die weiteren Klammerarme 28, 30 können voneinander wegbewegt (z.B. weggeschwenkt oder wegverschoben) werden.

Die Behälterhalterungen 14, 16 können zum gleichzeitigen Halten desselben Behälters 12 übereinander angeordnet. Das Behälterhalterungen 14, 16 können bspw. bezüglich einer Hochachse des Behälters 12 oder der Vorrichtung 10 vertikal versetzt zueinander angeordnet. Beispielsweise kann die Behälterhalterung 14 oberhalb von der weiteren Behälterhalterung 16 angeordnet sein, wie in den Figuren 1 bis 3 dargestellt ist, oder umgekehrt.

Die Behälterhalterung 14 kann den Behälter 12 an einem ersten Außenumfangsabschnitt bzw. Mantelabschnitt halten. Die weitere Behälterhalterung 16 kann den Behälter 12 an einem zweiten Außenumfangsabschnitt bzw. Mantelabschnitt halten. Der erste und zweite Außenumfangsabschnitt sind bevorzugt jeweils umlaufend bzw. in sich geschlossen. Die Außenumfangsabschnitte sind bezüglich einer Hochachse des Behälters 12 versetzt zueinander angeordnet. Beispielsweise ist der erste Außenumfangsabschnitt oberhalb von dem zweiten Außenumfangsabschnitt angeordnet oder umgekehrt.

Es ist möglich, dass der erste Außenumfangsabschnitt und der zweite Außenumfangsabschnitt sich in einer Form und/oder einer Größe bzw. Länge voneinander unterscheiden. Im dargestellten Ausführungsbeispiel ist beispielsweise die Form des ersten Außenumfangsabschnitts und des zweiten Außenumfangsabschnitts gleich, nämlich kreisrund bezüglich eines Behälterquerschnitts oder kegelstumpfförmig bezüglich der Hochachse des Behälters. Der erste und zweite Außenumfangsabschnitt unterscheiden sich in der Größe. Der erste Außenumfangsabschnitt weist einen kleineren Umfang und einen kleineren Durchmesser als der zweite Außenumfangsabschnitt auf.

Der Behälter 12 kann jeweils an den vorderen bzw. dem Behälter 12 zugewandten Abschnitten der Behälterhalterung 14 und optional der weiteren Behälterhalterung 16 gehalten sein. Im Einzelnen kann der Behälter 12 zwischen den freien Enden der Klammerarme 24, 26 und gegebenenfalls zwischen den freien Enden der weiteren Klammerarme 28, 30 gehalten sein. Die Klammerarme 24, 26 und gegebenenfalls die weiteren Klammerarme 28, 30 können den Behälter 12 an ihren freien Enden umgreifen. Die Klammerarme 24, 26 und gegebenenfalls die weiteren Klammerarme 28, 30 können den Behälter 12 zwischen ihren freien Enden unter Aufbringung einer Haltekraft einklemmen. Die Haltekraft der Behälterhalterung 14 kann durch die elektrische Antriebseinheit 20 bewirkt sein. Die Haltekraft der weiteren Behälterhalterung 16 kann durch die weitere elektrische Antriebseinheit 22 oder die elektrische Antriebseinheit 20 bewirkt sein.

Die beiden Behälterhalterungen 14, 16 können unabhängig bzw. entkoppelt voneinander bewegbar, vorzugsweise schwenkbar oder verschiebbar, sein. Die Behälterhalterung 14 kann bewegt (z. B. verschwenkt oder verschoben) werden, ohne dass die weitere Behälterhalterung 16 sich mitbewegt und umgekehrt. Eine Anlageschwenkbewegung oder Anlageverschiebbewegung der Behälterhalterung 14 an den Behälter 12 kann bspw. eine Anlageschwenkbewegung oder Anlageverschiebbewegung der weiteren Behälterhalterung 16 an den Behälter 12 nicht beeinflussen und umgekehrt. Die Anlageschwenkbewegung oder Anlageverschiebbewegung der weiteren Behälterhalterung 16 kann bspw. andauern, während die Behälterhalterung 14 bereits an dem Behälter 12 anliegt und umgekehrt (z. B. abhängig von einer Form und/oder Größe der Außenumfangsabschnitte des Behälters). Bspw. können die Behälterhalterungen 14, 16, vorzugsweise jeweils unter Wirkung einer der elektrischen Antriebseinheiten 20 und 22, die Anlagebewegung gleichzeitig beginnen und/oder nacheinander beenden (z. B. jeweils zum Zeitpunkt der Anlage an den Behälter 12). Bei der Anlageschwenkbewegung können die jeweilige Klammerarme 24, 26 bzw. 28, 30 aufeinander zu schwenken, wohingegen bei der Anlageverschiebebewegung die jeweiligen Klammerarme 24, 26 bzw. 28, 30 zueinander verschoben werden können.

Eine Freigabebewegung (z. B. Freigabeschwenkbewegung oder Freigabeverschiebebewegung) der weiteren Behälterhalterung 16 weg von dem Behälter 12 kann bevorzugt eine Freigabeschwenkbewegung der Behälterhalterung 14 weg von dem Behälter 12 nicht beeinflussen und umgekehrt. Die Freigabebewegung der Behälterhalterung 14 kann bspw. beginnen, bevor die Freigabebewegung der weiteren Behälterhalterung 16 beginnt und umgekehrt (z. B. abhängig von einer Form und/oder Größe der Außenumfangsabschnitte des Behälters 12). Bspw. können die Behälterhalterungen 14, 16, vorzugsweise unter Wirkung einer Betätigung der Behälterhalterungen 14 und 16 mittels der elektrischen Antriebseinheiten 20, 22, die Freigabebewegung gleichzeitig beenden. Bei der Freigabeschwenkbewegung können die jeweiligen Klammerarme 24, 26 bzw. 28, 30 voneinander wegschwenken, wohingegen bei der Freigabeverschiebebewegung die jeweiligen Klammerarme 24, 26 bzw. 28, 30 weg voneinander verschoben werden können.

Die Behälterhalterungen 14, 16 können jeweils eine Längsachse aufweisen. Die Längsachsen können im Wesentlichen parallel zueinander verlaufen. Die Längsachsen können im Wesentlichen senkrecht zu einer Hochachse der Vorrichtung 10 oder des Behälters 12 verlaufen. Im montierten Zustand können die Längsachsen im Wesentlichen parallel zu einer Horizontalebene verlaufen.

Die Behälterhalterung 14 kann an dem Träger 18 bewegbar, vorzugsweise schwenkbar oder verschiebbar, gelagert sein. Die weitere Behälterhalterung 16 kann an dem Träger 18 bewegbar, vorzugsweise schwenkbar oder verschiebbar, gelagert sein. Bevorzugt ist der Träger 18 als ein Klammerträger ausgeführt.

Die Behälterhalterungen 14, 16 können auf entgegengesetzten Seiten des Trägers 18 an dem Träger 18 gelagert sein. Der Träger 18 kann zwischen den Behälterhalterungen 14, 16 angeordnet sein, vorzugsweise bezüglich einer Hochachse der Vorrichtung 10. Der Träger 18 kann die Behälterhalterung 14 und gegebenenfalls die weitere Behälterhalterung 16 tragen. Der Träger 18 ist vorzugsweise blockförmig ausgeführt. Der Träger 18 erstreckt sich vorzugsweise länglich parallel zur Hochachse des Behälters 12 oder der Vorrichtung 10.

Die Behälterhalterung 14 kann bspw. mittels eines, vorzugsweise länglichen, Drehzapfens 32 des Trägers 18 schwenkbar gelagert sein. Im Einzelnen können die Klammerarme 24, 26 jeweils ein Durchgangsloch aufweisen, z. B. an einem der jeweils freien Enden entgegengesetzten Ende des jeweiligen Klammerarms 24, 26. Der Drehzapfen 32 kann sich durch die Durchgangslöcher erstrecken. Es ist möglich, dass eine Gleitbuchse zwischen dem Drehzapfen 32 und den Durchgangslöchern angeordnet ist.

Der Drehzapfen 32 kann sich koaxial zu einer Schwenkachse der Behälterhalterung 14 bzw. der Klammerarme 24, 26 erstrecken. Der Drehzapfen 32 kann sich parallel zu einer Hochachse der Vorrichtung 10 oder des Behälters 12 erstrecken. Beispielsweise kann der Drehzapfen 32 an einer Oberseite des Trägers 18 angeordnet sein.

Die optionale weitere Behälterhalterung 16 kann ebenfalls mittels eines, vorzugsweise länglichen, Drehzapfens 34 des Trägers 18 schwenkbar gelagert sein. Im Einzelnen können die weiteren Klammerarme 28, 30 jeweils ein Durchgangsloch aufweisen, z. B. an einem der jeweils freien Enden entgegengesetzten Ende des jeweiligen Klammerarms 28, 30. Der Drehzapfen 34 kann sich durch die Durchgangslöcher erstrecken. Es ist möglich, dass eine Gleitbuchsen zwischen dem Drehzapfen 34 und den Durchgangslöchern angeordnet ist.

Der Drehzapfen 32 kann sich koaxial zu einer Schwenkachse der weiteren Behälterhalterung 16 bzw. der Klammerarme 28, 30 erstrecken. Der Drehzapfen 34 kann sich parallel zu einer Hochachse der Vorrichtung 10 oder des Behälters 12 erstrecken. Beispielsweise kann der Drehzapfen 34 an einer Unterseite des Trägers 18 angeordnet sein.

Die Drehzapfen 32, 34 können auf entgegengesetzten Seiten des Trägers 18 angeordnet sein.

Die Klammerarme 24, 26 können übereinander auf den Drehzapfen 32 aufgesteckt sein. Die weiteren Klammerarme 28, 30 können übereinander auf den Drehzapfen 34 aufgesteckt sein. Die Klammerarme 24, 26 können axial auf dem Drehzapfen 32 gesichert sein. Die weiteren Klammerarme 28, 30 können axial auf dem Drehzapfen 34 gesichert sein. Die jeweilige axiale Sicherung kann bspw. mittels eines Schraubenkopfes einer Schraube erfolgen, die in ein (z. B. Zentral-) Loch im Drehzapfen 32 bzw. 34 eingeschraubt ist, vorzugsweise koaxial zur Schwenkachse der Behälterhalterungen 14 bzw. 16.

Angrenzend an die schwenkbare Lagerung zum Träger 18 kann die Behälterhalterung 14 und gegebenenfalls die weitere Behälterhalterung 16 verstärkt sein. Im Einzelnen kann eine Materialstärke der Klammerarme 24, 26 bzw. 28, 30 angrenzend an die schwenkbare Lagerung vergrößert sein. Die Klammerarme 24, 26 bzw. 28, 30 können bspw. Verstärkungsrippen 36 angrenzend an die schwenkbare Lagerung aufweisen. Die Verstärkungsrippen 36 können bspw. als Wandelemente auf einer Oberseite und/oder einer Unterseite der Klammerarme 24, 26 bzw. 28, 30 ausgeführt sein. Die Wandelemente können ringförmige bzw. umlaufende Strukturen sein. Die Verstärkungsrippen 36 können im Abschnitt der Klammerarme 24, 26 bzw. 28, 30 angeordnet sein, die den freien Enden der Klammerarme 24, 26 bzw. 28, 30 entgegengesetzt sind. Die Verstärkungsrippen 36 können sich in Richtung zu den freien Enden der Klammerarme 24, 26 bzw. 28, 30 verjüngen.

Es ist möglich, dass die Klammerarme 24 und 26 sowie gegebenenfalls 28 und 30 bspw. in deren Mittelabschnitten (bezüglich der jeweiligen Längsachsen) einander zugewandte Anschläge aufweisen. An den Anschlägen können die Klammerarme 24 und 26 sowie gegebenenfalls 28 und 30 in der Schließstellung aneinander anliegen, wenn sie keinen Behälter 12 halten.

Die Behälterhalterung 14 und gegebenenfalls 16 können von der elektrischen Antriebseinheit 20 und gegebenenfalls 22 bewegt bzw. betätigt werden. Die elektrischen Antriebseinheiten 20, 22 können die Bewegung der Behälterhalterungen 14, 16 antreiben.

Im Einzelnen ist die elektrische Antriebseinheit 20 zum Betätigen, z. B. Öffnen und/oder Schließen, der Behälterhalterung 14 in Wirkverbindung mit der Behälterhalterung 14. Die weitere elektrische Antriebseinheit 22 kann zum Betätigen, z. B. Öffnen und/oder Schließen, der weiteren Behälterhalterung 16 in Wirkverbindung mit der weiteren Behälterhalterung 16 sein. Es ist allerdings auch möglich, dass beide Behälterhalterungen 14, 16 von der elektrischen Antriebseinheit 20 betätigt werden und die weitere elektrische Antriebseinheit 22 nicht vorhanden ist. Wie bereits erwähnt, ist es ebenfalls möglich, dass die weitere Behälterhalterung 16 nicht vorhanden ist, wobei dann folglich auch die weitere elektrische Antriebseinheit 22 nicht vorhanden wäre.

Bevorzugt kann die Behälterhalterung 14 von der elektrischen Antriebseinheit 20 geschwenkt werden. Die weitere Behälterhalterung 16 kann von der weiteren elektrischen Antriebseinheit 22 geschwenkt werden. Besonders bevorzugt kann die Behälterhalterung 14 bzw. 16 derart angetrieben werden, dass diese zum Schließen schwenkt, um den Behälter 12 festzuhalten bzw. zu übernehmen, und zum Öffnen schwenkt, um den gehaltenen Behälter 12 freizugeben. Wie erwähnt ist es jedoch auch möglich, dass die Behälterhalterung 14 und gegebenenfalls 16 verschiebbar statt verschwenkbar ist. Entsprechend können die elektrischen Antriebseinheiten 20, 22 die Behälterhalterungen 14, 16 dann derart antreiben, dass diese verschoben werden.

Die elektrische Antriebseinheit 20 kann ein Ausgabeelement 20.1 aufweisen. Die weitere elektrische Antriebseinheit 22 kann ein weiteres Ausgabeelement 22.1 aufweisen. Das Ausgabeelement 20.1 kann die Behälterhalterung 14 bewegen. Das weitere Ausgabeelement 22.1 kann die weitere Behälterhalterung 16 bewegen. Bevorzugt sind die Ausgabeelemente 20.1 und 22.1 linear bewegbar bzw. verschiebbar.

Die elektrisch Antriebseinheit 20 und gegebenenfalls 22 kann beispielsweise als elektrische, elektromagnetische, elektromotorische oder piezoelektrische (z. B. Linear-) Antriebseinheit ausgeführt sein. Eine Schubstange kann hin- und herbewegbar in der Linearantriebseinheit aufgenommen sein. Die Schubstange kann das Ausgabeelement 20.1 bzw. 22.1 der jeweiligen Antriebseinheit 20 bzw. 22 sein. Eine Zufuhr von elektrischem Strom zu der jeweiligen elektrischen Antriebseinheit 20, 22 kann die Schubstange in einer ersten Richtung bewegen, zum Beispiel zum Ausfahren, und/oder in einer der ersten Richtung entgegengesetzten zweiten Richtung bewegen, zum Beispiel zum Einfahren.

Die elektrische Antriebseinheit 20 und gegebenenfalls 22 kann bevorzugt einen maximal begrenzten Hub für das Ausgabeelement 20.1 bzw. 22.1 aufweisen, um bspw. einen maximal möglichen Behälterdurchmesser greifbar zu machen.

Die elektrischen Antriebseinheiten 20, 22 können vorzugsweise unabhängig voneinander ansteuerbar sein.

Es ist möglich, dass bspw. eine Haltekraft, ein Öffnungszeitpunkt, ein Schließzeitpunkt und/oder ein Verstellweg der Behälterhalterung 14 mittels der elektrischen Antriebseinheit 20 und gegebenenfalls der weiteren Behälterhalterung 16 mittels der weiteren elektrischen Antriebseinheit 22 variabel verstellbar ist. Die variable Verstellung kann bevorzugt im laufenden Betrieb erfolgen und/oder bspw. kein Umrüsten erfordern.

Zum Betreiben der elektrischen Antriebseinheit 20 und gegebenenfalls 22 kann die Verarbeitungseinrichtung 37 (nur schematisch in den Figuren 1 und 2 dargestellt) umfasst sein.

Die Verarbeitungseinrichtung 37 kann zum Betreiben der elektrischen Antriebseinheit 20 und gegebenenfalls 22 mit der elektrischen Antriebseinheit 20 und gegebenenfalls 22 elektrisch verbunden sein. Besonders bevorzugt ist die elektrische Verbindung zwischen der Verarbeitungseinrichtung 37 und der elektrischen Antriebseinheit 20 separat bzw. unabhängig von der elektrischen Verbindung zwischen der Verarbeitungseinrichtung 37 und der weiteren elektrischen Antriebseinheit 22 ausgeführt.

Die Verarbeitungseinrichtung 37 ist bevorzugt zum Betreiben mehrerer Antriebseinheiten 20, 22 von mehreren Vorrichtungen 10 einer Transportvorrichtung, z. B. eines Klammersterns, verbunden.

Die Verarbeitungseinrichtung 37 kann die elektrische Antriebseinheit 20 und/oder die weitere elektrische Antriebseinheit 22 vorzugsweise in unterschiedlichen Modi betreiben. Zwischen den Modi kann im Betrieb oder in einer Betriebspause umgeschaltet werden. Das Umschalten der Modi ist möglich, ohne dass ein Umrüsten der Vorrichtung 10 oder der Transportvorrichtung, die die Vorrichtung 10 umfasst, notwendig ist.

Die unterschiedlichen Modi können sich beispielsweise darin unterscheiden, dass eine von der elektrischen Antriebseinheit 20 und gegebenenfalls 22 bewirkte Haltekraft der Behälterhalterung 14 und gegebenenfalls 16, ein von der elektrischen Antriebseinheit 20 und gegebenenfalls 22 bewirkter Schließzeitpunkt der Behälterhalterung 14 und gegebenenfalls 16, ein von der elektrischen Antriebseinheit 20 und gegebenenfalls 22 bewirkter Öffnungszeitpunkt der Behälterhalterung 14 und gegebenenfalls 16 und/oder ein von der elektrischen Antriebseinheit 20 und gegebenenfalls 22 bewirkter Verstellweg der Behälterhalterung 14 und gegebenenfalls 16 in den unterschiedlichen Modi zumindest teilweise unterschiedlich ist.

Die unterschiedlichen Modi können beispielsweise zum Halten unterschiedlicher Behälter 12 konfiguriert und eingesetzt werden. Beispielsweise können die unterschiedlichen Modi ermöglichen, dass Behälter 12 mit unterschiedlichen Behältergewichten, unterschiedlichen Behältergrößen, unterschiedlicher Behälterformen, unterschiedlichen Behälterdurchmessern und/oder unterschiedlichen Behältermaterialien von der Vorrichtung 10 sicher übernommen, gehalten und freigegeben werden können. Es ist auch möglich, dass die unterschiedlichen Modi zum unterschiedlichen Fahren bzw. Betreiben der Anlage bzw. der Transportvorrichtung, die die Vorrichtung 10 umfasst, eingesetzt werden.

Die elektrischen Antriebseinheiten 20, 22 sind bevorzugt baugleich und/oder funktionsgleich ausgebildet. Bevorzugt sind die elektrische Antriebseinheit 20 und die weitere elektrische Antriebseinheit 22 im Wesentlichen spiegelsymmetrisch bezüglich der Mittellängsebene der Vorrichtung 10 bzw. bezüglich einer Horizontalebene (im montierten Zustand) ausgebildet.

Die elektrischen Antriebseinheiten 20, 22 können übereinander angeordnet sein. Die elektrischen Antriebseinheit 20 und gegebenenfalls 22 kann an dem Träger 18 getragen sein. Bevorzugt ist die elektrische Antriebseinheit 20 und gegebenenfalls 22 geschützt auf einer Rückseite des Trägers 18 angeordnet, die dem Behälter 12 abgewandt ist.

Es ist möglich, dass die elektrische Antriebseinheit 20 und gegebenenfalls 22 direkt mit der Behälterhalterung 14 und gegebenenfalls 16 verbunden ist bzw. in Wirkverbindung steht. Alternativ kann die elektrische Antriebseinheit 20 und gegebenenfalls 22 bspw. mittels einer Verbindungseinrichtung 38 und gegebenenfalls 39 mit der Behälterhalterung 14 und gegebenenfalls 16 verbunden sein bzw. in Wirkverbindung stehen. Die Verbindungseinrichtungen 38 kann die elektrische Antriebseinheit 20 antreibend mit der Behälterhalterung 14 verbinden. Die weitere Verbindungseinrichtung 39 kann die elektrische Antriebseinheit 20 oder die weitere elektrische Antriebseinheit 22 (wie dargestellt ist) antreibend mit der weiteren Behälterhalterung 16 verbinden.

Die Verbindungseinrichtungen 38, 39 können zwischen der Behälterhalterung 14 und der weiteren Behälterhalterung 16 angeordnet sein, vorzugsweise bezüglich einer Hochachse der Vorrichtung 10. Im Einzelnen kann die weitere Verbindungseinrichtung 39 zumindest teilweise auf einer Oberseite der weiteren Behälterhalterung 16 angeordnet sein. Die Verbindungseinrichtung 38 kann zumindest teilweise auf einer Unterseite der Behälterhalterung 14 angeordnet sein. Eine jeweilige Längserstreckungsrichtung der Verbindungseinrichtung 38, 39 kann sich im Wesentlichen parallel zu den Längsachsen der Behälterhalterungen 14, 16 erstrecken.

Die Verbindungseinrichtung 38 und gegebenenfalls 39 kann von dem Träger 18 getragen sein. Die Verbindungseinrichtung 38 und gegebenenfalls 39 kann sich zumindest teilweise durch den Träger 18 erstrecken, vorzugsweise in einem Durchgangsloch, das sich von einer Rückseite bzw. einer dem Behälter 12 abgewandten Seite des Trägers 18 zu einer Vorderseite bzw. einer dem Behälter 12 zugewandten Seite des Trägers 18 erstreckt.

Die Verbindungseinrichtungen 38, 39 können bevorzugt entkoppelt voneinander sein, sodass sie sich unabhängig voneinander bewegen können. Die Verbindungseinrichtung 38 kann sich bewegen, ohne dass sich die weitere Verbindungseinrichtung 39 bewegt und umgekehrt.

Die Verbindungseinrichtung 38 kann in einem Abschnitt zwischen den freien Enden und der (z. B. Schwenk-) Lagerung der Klammerarme 24, 26 mit den Klammerarmen 24, 26 verbunden sein, vorzugsweise in Mittelabschnitten der Klammerarme 24, 26 bezüglich der jeweiligen Längsachse. Die weitere Verbindungseinrichtung 39 kann in einem Abschnitt zwischen den freien Enden und der (z. B. Schwenk-) Lagerung der weiteren Klammerarme 28, 30 mit den weiteren Klammerarmen 28, 30 verbunden sein, vorzugsweise in Mittelabschnitten der weiteren Klammerarme 28, 30 bezüglich der jeweiligen Längsachse.

Die Verbindungseinrichtung 38 kann vorzugsweise ein Übertragungselement 40, ein Koppelelement 42 und zwei Schwenkarme 44, 46 aufweisen. Es ist möglich, dass die Komponenten 40, 42, 44, 46 zumindest teilweise ineinander integriert sind. Die weitere Verbindungseinrichtung 39 kann mit einem Übertragungselement 50, einem Koppelelement 52 und zwei Schwenkarmen 54, 56 wie die Verbindungseinrichtung 38 aufgebaut sein und funktionieren. Die nachfolgenden Detailausführungen zu der Verbindungseinrichtung 38 können somit, mutatis mutandis, entsprechend für die weitere Verbindungseinrichtung 39 gelten.

Das Übertragungselement 40 kann verschiebbar in dem Träger 18 gelagert, vorzugsweise in einer Gleitbuchse. Das Übertragungselement 40 kann länglich, vorzugsweise stangenförmig, sein. Das Übertragungselement 40 kann von dem Ausgabeelement 20.1 verschoben werden, vorzugsweise parallel zu der Längsachse der Behälterhalterung 14. Das Übertragungselement 40 kann vorzugsweise endseitig an dem Ausgabeelement 20.1 angebracht sein. Das Übertragungselement 40 kann das Koppelelement 42 tragen, vorzugsweise an einem Ende, das dem Ausgabeelement 20.1 entgegengesetzt ist.

Das Koppelelement 42 kann an dem Übertragungselement 40 angebracht sein, vorzugsweise stirnseitig. Beispielsweise kann das Koppelelement 42 mittels einer Schraube an dem Übertragungselement 40 angebracht sein. Wird das Übertragungselement 40 verschoben, kann das Koppelelement 42 mitverschoben werden. Das Koppelelement 42 kann das Übertragungselement 40 mit den Schwenkarmen 44, 46 koppeln.

Der Schwenkarm 44 kann den Klammerarm 24 mit dem Koppelelement 42 verbinden. Der Schwenkarm 44 kann an einem Ende schwenkbar mit dem Koppelelement 42 verbunden sein, z. B. mittels eines Bolzens oder Drehzapfens. Der Schwenkarm 44 kann an einem entgegengesetzten Ende schwenkbar mit dem Klammerarm 24 verbunden sein, z. B. mittels eines Bolzens oder Drehzapfens.

Der Schwenkarm 46 kann den Klammerarm 26 mit dem Koppelelement 42 verbinden. Der Schwenkarm 46 kann an einem Ende schwenkbar mit dem Koppelelement 42 verbunden sein, z. B. mittels eines Bolzens oder Drehzapfens. Der Schwenkarm 46 kann an einem entgegengesetzten Ende schwenkbar mit dem Klammerarm 26 verbunden sein, z. B. mittels eines Bolzens oder Drehzapfens.

Die Schwenkarme 44, 46 sind bevorzugt V-förmig und/oder übereinander (z. B. bezüglich einer Hochachse der Vorrichtung 10) angeordnet. Die Schwenkarme 44, 46 sind vorzugsweise koaxial bezüglich des Koppelelements 42 schwenkbar. Es sind allerdings bspw. auch parallele Schwenkachsen für die Schwenkarme 44, 46 bezüglich des Koppelelements 42 möglich. Die Schwenkarme 44, 46 können bezüglich einer Hochachse der Vorrichtung 10 vorzugsweise zwischen dem Koppelelement 42 bzw. dem Übertragungselement 40 und der Behälterhalterung 14 angeordnet sein.

Eine mechanische Eingabe durch das Ausgabeelement 20.1 der elektrischen Antriebseinheit 20 kann eine Verschiebung des Übertragungselements 40 in Richtung zu oder weg von dem Behälter 12 bewirken. Eine Verschiebung des Übertragungselements 40 in Richtung zu oder weg von dem Behälter 12 kann eine Verschiebung des Koppelelements 42 in Richtung zu oder weg von dem Behälter 12 bewirken. Eine Verschiebung des Koppelelements 42 in Richtung zu oder weg von dem Behälter 12 kann eine Verschiebung der mit dem Koppelelement 42 schwenkbar verbundenen Enden der Schwenkarme 44, 46 in Richtung zu oder weg von dem Behälter 12 bewirken. Eine Verschiebung der schwenkbar mit dem Koppelelement 42 verbundenen Enden der Schwenkarme 44, 46 kann ein Schwenken der Schwenkarme 44, 46 an diesen Enden, da die Schwenkarme 44, 46 an den Klammerarmen 24, 26 abgestützt sind, bewirken. Das Schwenken der Schwenkarme 44, 46 bewirkt ein Schwenken der Klammerarme 24, 26, z. B. ein Aufschwenken bzw. Öffnen der Klammerarme 24, 26 zum Freigeben des Behälters 12 oder ein Zuschwenken bzw. Schließen der Klammerarme 24, 26 zum Ergreifen des Behälters 12.

Das Übertragungselement 40, das Koppelelement 42, die Schwenkarme 44, 46 und die Klammerarme 24, 26 können bevorzugt zusammen einen Kniehebel bzw. ein Kniehebelgelenk bilden.

Bevorzugt weisen die Behälterhalterung 14 und gegebenenfalls 16, die elektrische Antriebseinheit 20 und gegebenenfalls 22 und die Verbindungseinrichtung 38 und gegebenenfalls 39 keine elastischen Federelemente auf. Es ist allerdings prinzipiell auch möglich, dass bspw. die elektrische Antriebseinheit 20 und gegebenenfalls 22 ein elastisches Federelement aufweisen, sodass das Ausgabeelement 20.1, 22.1 bspw. in Richtung zu einer Öffnungsstellung oder einer Schließstellung vorgespannt ist.

Die Vorrichtung 10 kann eine Befestigungseinrichtung 62 aufweisen. Die Befestigungseinrichtung 62 kann dazu ausgebildet sein, die Vorrichtung 10 an einer Transportvorrichtung, z. B. einem Transportkarussell, zu befestigen, z. B. mittels einer Schraubverbindung. Die Befestigungseinrichtung 62 kann mindestens ein Positionierelement aufweisen. Das Positionierelement kann die Vorrichtung 10 bei der Befestigung an der Transportvorrichtung korrekt an der Transportvorrichtung positionieren. Das Positionierelement kann bspw. als ein Positionierstift ausgeführt sein. Die Befestigungseinrichtung 62 kann an dem Träger 18 befestigt sein, z. B. an einer Rückseite, Oberseite und/oder Unterseite des Trägers 18.

Die Verarbeitungseinrichtung 37 kann mit einer Ausgabeeinrichtung 70 verbunden sein (nur schematisch in den Figuren 1 und 2 dargestellt). Die Ausgabeeinrichtung 70 kann bspw. eine visuelle, akustische und/oder haptische Ausgabeeinrichtung sein. Bevorzugt weist die Ausgabeeinrichtung 70 eine bspw. berührungsempfindliche Anzeige, eine Signalleuchte und/oder einen Lautsprecher auf.

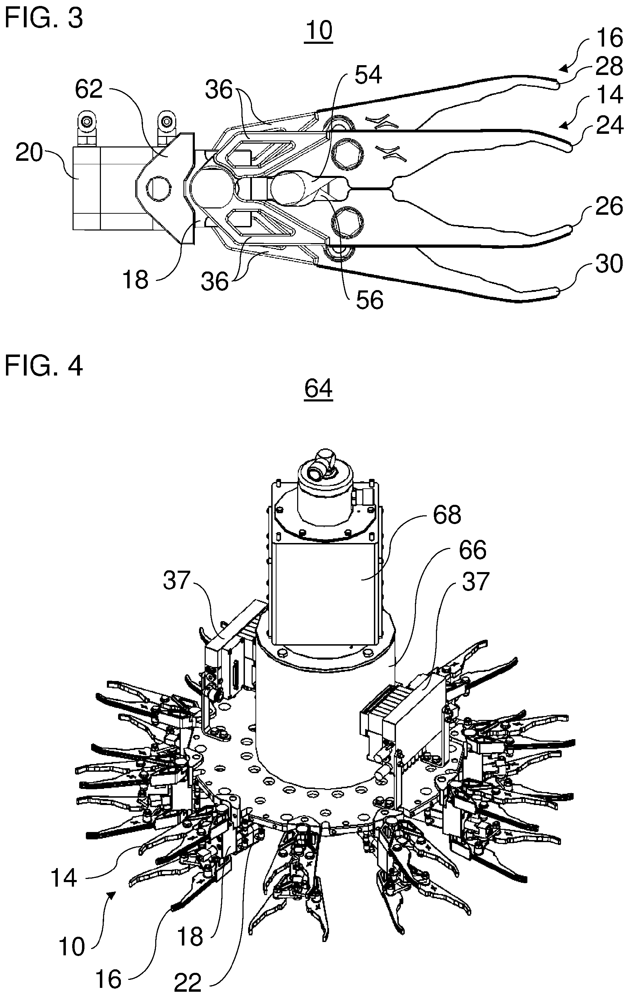

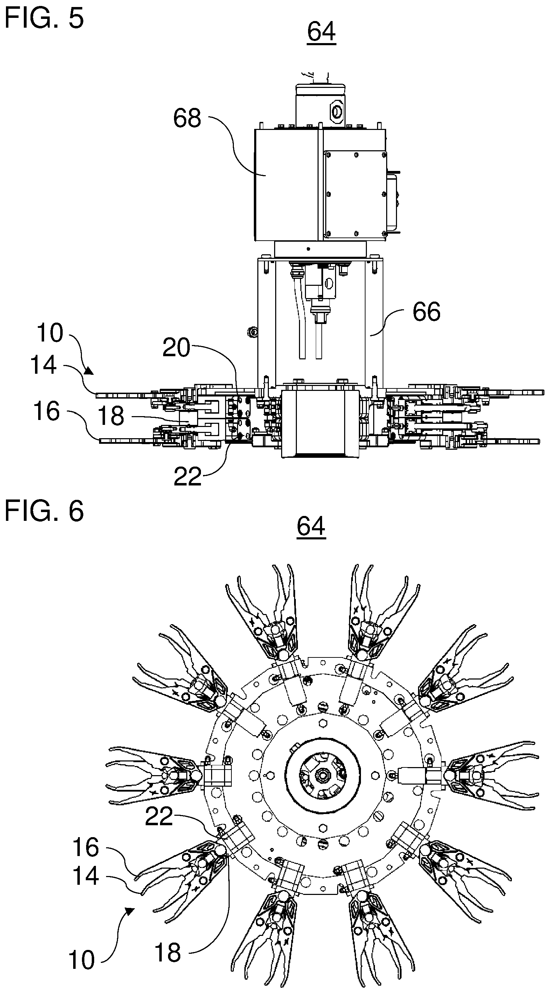

Die Figuren 4 bis 6 zeigen unterschiedliche Ansichten einer Vorrichtung 64 zum Transportieren von Behältern 12 mit mehreren Vorrichtungen 10. Der besseren Übersicht halber ist lediglich eine Vorrichtung 10 usw. mit einem Bezugszeichen versehen.

Die Vorrichtung 64 kann bevorzugt in einer Behälterbehandlungsanlage zum Transportieren von Behältern 12 umfasst sein. In der Behälterbehandlungsanlage können die Behälter 12 beispielsweise hergestellt, gereinigt, geprüft, abgefüllt, verschlossen, etikettiert, bedruckt und/oder verpackt werden. Es ist möglich, dass die Vorrichtung 64 beispielsweise als ein Einlaufstern oder ein Auslaufstern einer Behälterbehandlungsvorrichtung angeordnet ist.

Die Vorrichtung 64 ist bevorzugt als ein drehbares Transportkarussell ausgeführt. Die Vorrichtungen 10 sind, vorzugsweise gleichmäßig, um einen Umfang der Vorrichtung 64 herum angeordnet. Die Vorrichtung 64 kann als ein sogenannter Klammerstern ausgeführt sein. Aufgrund der beispielhaften Doppelstöckigkeit der Vorrichtungen 10 kann der Klammerstern als doppelstöckiger Klammerstern ausgeführt sein. Es ist allerdings auch möglich, dass die Vorrichtung 64 bspw. als ein Linearförderer oder ein einstöckiger Klammerstern ausgeführt ist.

Die Vorrichtung 64 kann eine Antriebseinheit 66 und einen Schleifringübertrager 68 aufweisen.

Mittels der Antriebseinheit 66 kann die Vorrichtung 64 und damit die Vorrichtungen 10 bewegt werden. Bevorzugt kann die Antriebseinheit 66 die Vorrichtung 64 und damit die Vorrichtungen 10 um eine Mittelvertikalachse der Vorrichtung 64 drehen. Die Antriebseinheit 66 kann je nach Konfiguration beispielsweise an einer Oberseite oder einer Unterseite der Vorrichtung 64 angeordnet sein.

Der Schleifringübertrager 68 kann mit der elektrischen Antriebseinheit 20 und der weiteren elektrischen Antriebseinheit 22 verbunden sein. Der Schleifringübertrager 68 kann beispielsweise eine elektrische Schnittstelle aufweisen, die eine elektrische Verbindung zwischen einem sich drehenden Teil des Schleifringübertragers 68 und einem feststehenden Teil des Schleifringübertragers 68 ermöglicht. Beispielsweise kann das Gehäuse des Schleifringübertragers 68 feststehend sein. Ein innerhalb des Gehäuses angeordnetes Teil des Schleifringübertragers 68 kann wiederum drehbar gelagert sein und sich mit dem drehenden Teil der Vorrichtung 64 im Betrieb mitdrehen.

Je nach Ausführung kann in der Verbindung zwischen dem Schleifringübertrager 68 und den elektrischen Antriebseinheiten 20, 22 die Verarbeitungseinrichtung 37 angeordnet sein. Alternativ kann die Verarbeitungseinrichtung 37 nicht zwischen dem Schleifringübertrager 68 und den elektrischen Antriebseinheiten 20, 22 verbunden bzw. zwischengeschaltet sein, sondern bspw. dem Schleifringübertrager 68 vorgeschaltet sein.

Eine Besonderheit der vorliegenden Offenbarung besteht darin, dass die Verarbeitungseinrichtung 37 (mindestens) einen elektrischen Betriebsparameter der elektrischen Antriebseinheit 20 und optional der weiteren elektrischen Antriebseinheit 22, sofern vorhanden, überwacht. Der elektrische Betriebsparameter kann bspw. eine elektrische Stromaufnahme der elektrischen Antriebseinheit 20 und optional der weiteren elektrischen Antriebseinheit 22 oder eine elektrische Leistung der elektrischen Antriebseinheit 20 und optional der weiteren elektrischen Antriebseinheit 22 sein.

In Abhängigkeit von dem überwachten elektrischen Betriebsparameter ermittelt die Verarbeitungseinrichtung 37 einen Zustand der Behälterhalterung 14 und gegebenenfalls der weiteren Behälterhalterung 16. Die Verarbeitungseinrichtung 37 kann auf diese Weise beispielsweise einen Verschleißzustand und/oder einen Defekt der Behälterhalterung 14 und gegebenenfalls der weiteren Behälterhalterung 16 ermitteln. Es ist auch möglich, dass der ermittelte Zustand angibt, ob die Behälterhalterung 14 und gegebenenfalls die weitere Behälterhalterung 16 überhaupt einen Behälter 12 hält oder erfolgreich übernommen hat (Signal "Behälter/Flasche da") oder ob die Behälterhalterung 14 und gegebenenfalls die weitere Behälterhalterung 16 beim Betätigen lediglich einen Leerweg ohne Übernahme des Behälters 12 ausgeführt hat.

Die Zustandsermittlung kann bspw. durch einen Vergleich des überwachten elektrischen Betriebsparameters mit mindestens einem vorgegebenen Grenzwert und/oder mindestens einem vorgegebenen Wertebereich für den elektrischen Betriebsparameter erfolgen. Der mindestens eine Grenzwert und/oder der mindestens eine Wertebereich können in der Verarbeitungseinrichtung 37 abgespeichert sein. Der mindestens eine Grenzwert und/oder der mindestens eine Wertebereich können beispielsweise empirisch, durch Tests, im Feld und/oder simulativ ermittelt werden und indikativ bzw. charakteristisch für bestimmte Zustände der Behälterhalterung 14 und gegebenenfalls der weiteren Behälterhalterung 16 sein. Der mindestens eine Grenzwert und/oder der mindestens eine Wertebereich können abhängig von der Konstruktion der Vorrichtung 10 bzw. 64 und der Ausführung der Behälter 12 sein. Der Vergleich kann den Vergleich von Einzelwerten des überwachten elektrischen Betriebsparameters und/oder von Verläufen des überwachten elektrischen Betriebsparameters aufweisen.

So kann bspw. eine defekte Behälterhalterung eine zumindest teilweise undefinierte Stromaufnahme oder gar keine Stromaufnahme der elektrischen Antriebseinheit zur Folge haben. Ein zunehmender Verschleiß kann bspw. anhand einer Stromaufnahme erkannt werden, die höher als normal ist und bspw. mit zunehmender Anzahl an Betätigungen der Behälterhalterung 14 und gegebenenfalls der weiteren Behälterhalterung 16 zunimmt.

Die Erkennung, ob überhaupt ein Behälter 12 von der Behälterhalterung 14 und gegebenenfalls weitere Behälterhalterung 16 übernommen wurde und gehalten wird oder ob die Behälterhalterung 14 und gegebenenfalls die weitere Behälterhalterung 16 nur einen Leerweg ohne Behälterübernahme ausgeführt hat, kann bspw. an hierfür charakteristischen Verläufen der Stromaufnahme erkannt werden.

Es ist auch möglich, dass die Verarbeitungseinrichtung 37 in Abhängigkeit von dem überwachten elektrischen Betriebsparameter ein Merkmal des Behälters 12 ermittelt. Beispielsweise kann anhand der Stromaufnahme ermittelt werden, wann die Behälterhalterung 14 und gegebenenfalls 16 in Anlage mit dem Behälter 12 gekommen ist. Daraus lässt sich beispielsweise eine Abmessung, wie ein Behälterdurchmesser oder eine Behälterbreite, des Behälters 12 ableiten. Ebenso kann anhand der Stromaufnahme zum Halten der Behälterhalterung 14 und gegebenenfalls 16 in Anlage mit dem Behälter 12 auf ein Gewicht bzw. eine Gewichtskraft des Behälters 12 geschlossen werden und somit beispielsweise ob der Behälter 12 bspw. korrekt befüllt wurde oder leer ist.

In Ausführungsbeispielen mit den zwei elektrischen Antriebseinheiten 20, 22 für die zwei Behälterhalterungen 14, 16 ist es zudem möglich, dass die elektrischen Betriebsparameter der zwei elektrischen Antriebseinheiten 20, 22 untereinander verglichen werden, um den Zustand der Behälterhalterungen 14, 16 zu ermitteln.

Die Verarbeitungseinrichtung 37 kann die Vorrichtung 10 bzw. 64 in Abhängigkeit von dem ermittelten Zustand und/oder dem überwachten elektrischen Betriebsparameter betreiben. Beispielsweise kann die Verarbeitungseinrichtung 37 einen Notstopp anweisen, wenn von der Verarbeitungseinrichtung 37 ein Defekt oder ein unmittelbar bevorstehender Defekt der Behälterhalterung 14 und gegebenenfalls 16 ermittelt wird. Die Verarbeitungseinrichtung 37 kann auch eine selbsteinstellende Steuerung oder Regelung des Betriebs der elektrischen Antriebseinheit 20 und gegebenenfalls 22 vornehmen. Beispielsweise können auf diese Weise eine Haltekraft, ein Öffnungszeitpunkt, ein Schließzeitpunkt und/oder ein Verstellweg der Behälterhalterung 14 und gegebenenfalls 16 automatisch angepasst und somit bevorzugt im Betrieb optimiert werden.

Es ist ebenfalls möglich, einen Betrieb der elektrischen Antriebseinheit 20 und gegebenenfalls 22 an eine Leistung (z. B. Behälterausbringungsmenge pro Zeiteinheit) der Vorrichtung 64 anzupassen. So treten beispielsweise bei einer geringen Leistung der Vorrichtung 64 (zum Beispiel mit 10.000 Behälter pro Stunde) geringere Kräfte als bei einer hohen Leistung der Vorrichtung 64 (zum Beispiel mit 60.000 Behälter pro Stunde) auf. Bei einer niedrigen Leistung der Vorrichtung 64 sind demzufolge auch nur geringerer Haltekräfte zum Halten des Behälters 12 in der Behälterhalterung 14 und gegebenenfalls 16 erforderlich. Die Verarbeitungseinrichtung 37 kann beispielsweise die elektrische Leistung der Antriebseinheit 20 und gegebenenfalls 22 in Abhängigkeit von der aktuellen Leistung der Vorrichtung 64 anpassen.

Es ist auch möglich, dass die Verarbeitungseinrichtung 37 Informationen bezüglich des ermittelten Zustands der Behälterhalterung 14 und gegebenenfalls 16 und/oder des ermittelten Merkmals des Behälters 12 an die Ausgabeeinrichtung 70 zum Ausgeben dieser Informationen an einen Benutzer übermittelt. So können beispielsweise auch Warnhinweise oder Wartungshinweise ausgegeben werden, wenn ein Defekt oder ein bestimmter Verschleiß ermittelt wird.

### Bezugszeichenliste

| | | | |
|---|---|---|---|
| 10 | Vorrichtung | 37 | Verarbeitungseinrichtung |
| 12 | Behälter | 38 | Verbindungseinrichtung |
| 14 | Behälterhalterung | 39 | weitere Verbindungseinrichtung |
| 16 | weitere Behälterhalterung | 40 | Übertragungselement |
| 18 | Träger | 42 | Koppelelement |
| 20 | elektrische Antriebseinheit | 44 | Schwenkarm |
| 20.1 | Ausgabeelement | 46 | Schwenkarm |
| 22 | weitere elektrische Antriebseinheit | 50 | Übertragungselement |
| 22.1 | Ausgabeelement | 52 | Koppelelement |
| 24 | Klammerarm | 54 | Schwenkarm |
| 26 | Klammerarm | 56 | Schwenkarm |
| 28 | weiterer Klammerarm | 62 | Befestigungseinrichtung |
| 30 | weiterer Klammerarm | 64 | Vorrichtung |
| 32 | Drehzapfen | 66 | Antriebseinheit |
| 34 | Drehzapfen | 68 | Schleifringübertrager |
| 36 | Verstärkungsrippe | 70 | Ausgabeeinrichtung |

## Patentansprüche

1. Vorrichtung (10; 64) zum Transportieren von Behältern (12) für eine Behälterbehandlungsanlage, aufweisend:
eine Behälterhalterung (14), vorzugsweise ein Klammerarmpaar, zum Halten eines Behälters (12);
eine elektrische Antriebseinheit (20), die zum Betätigen der Behälterhalterung (14) in Wirkverbindung mit der Behälterhalterung (14) ist; und
eine Verarbeitungseinrichtung (37), die dazu konfiguriert ist:
- einen elektrischen Betriebsparameter, vorzugsweise eine Stromaufnahme und/oder eine elektrische Leistung, der elektrischen Antriebseinheit (20) zu überwachen; und
- einen Zustand der Behälterhalterung (14) in Abhängigkeit von dem überwachten elektrischen Betriebsparameter der elektrischen Antriebseinheit (20) zu ermitteln, **dadurch gekennzeichnet, dass**:
der ermittelte Zustand ein Verschleißzustand und/oder ein Defekt der Behälterhalterung (14) ist; und/oder
der ermittelte Zustand angibt, ob die Behälterhalterung (14) bei dem Betätigen einen Leerweg ohne Übernahme des Behälters (12) ausgeführt hat.

2. Vorrichtung (10; 64) nach Anspruch 1, wobei:
die Verarbeitungseinrichtung (37) dazu konfiguriert ist:
- den elektrischen Betriebsparameter der elektrischen Antriebseinheit (20) während eines Betätigens der Behälterhalterung (14) mittels der elektrischen Antriebseinheit (20) zu überwachen; und
- den Zustand der Behälterhalterung (14) in Abhängigkeit von dem während des Betätigens der Behälterhalterung (14) überwachten elektrischen Betriebsparameter der elektrischen Antriebseinheit (20) zu ermitteln.

3. Vorrichtung (10; 64) nach einem der vorhergehenden Ansprüche, wobei:
der ermittelte Zustand angibt:
- ob die Behälterhalterung (14) den Behälter (12) hält oder übernommen hat.

4. Vorrichtung (10; 64) nach einem der vorhergehenden Ansprüche, wobei:
die Verarbeitungseinrichtung (37) ferner dazu konfiguriert ist, ein Merkmal, vorzugsweise eine Abmessung und/oder ein Gewicht, des Behälters (12) in Abhängigkeit von dem überwachten elektrischen Betriebsparameter der elektrischen Antriebseinheit (20) zu ermitteln.

5. Vorrichtung (10; 64) nach einem der vorhergehenden Ansprüche, ferner aufweisend:
eine Ausgabeeinrichtung (70) zum Ausgeben von Informationen an einen Benutzer,
wobei die Verarbeitungseinrichtung (37) ferner dazu konfiguriert ist, die Ausgabeeinrichtung (70) zum Ausgeben einer Information, die den ermittelten Zustand angibt, zu steuern.

6. Vorrichtung (10; 64) nach einem der vorhergehenden Ansprüche, wobei:
die Verarbeitungseinrichtung (37) ferner dazu konfiguriert ist, die elektrische Antriebseinheit (20) in Abhängigkeit von dem ermittelten Zustand zu betreiben.

7. Vorrichtung (10; 64) nach einem der vorhergehenden Ansprüche, wobei:
eine Haltekraft, ein Öffnungszeitpunkt, ein Schließzeitpunkt und/oder ein Verstellweg der Behälterhalterung (14) mittels der elektrischen Antriebseinheit (20) variabel verstellbar ist, vorzugsweise automatisch mittels der Verarbeitungseinrichtung (37) in Abhängigkeit von dem überwachten elektrischen Betriebsparameter; und/oder
die Verarbeitungseinrichtung (37) dazu konfiguriert ist, die elektrische Antriebseinheit (20) in unterschiedlichen Modi zu betreiben, wobei vorzugsweise:
- die unterschiedlichen Modi sich zumindest teilweise in Bezug auf eine Haltekraft, einen Öffnungszeitpunkt, einen Schließzeitpunkt und/oder einen Verstellweg der Behälterhalterung (14) unterscheiden; und/oder
- die unterschiedlichen Modi zum Halten unterschiedlicher Behälter (12) konfiguriert sind, wobei sich die unterschiedlichen Behälter (12) in Bezug auf ein Behältergewicht, eine Behältergröße, eine Behälterform, einen Behälterdurchmesser und/oder ein Behältermaterial unterscheiden.

8. Vorrichtung (10; 64) nach einem der vorhergehenden Ansprüche, ferner aufweisend:
eine weitere Behälterhalterung (16), vorzugsweise ein weiteres Klammerarmpaar, wobei die Behälterhalterung (14) und die weitere Behälterhalterung (16) zum gleichzeitigen Halten des Behälters (12) übereinander angeordnet sind;
eine weitere elektrische Antriebseinheit (22), die zum Betätigen der weiteren Behälterhalterung (16) in Wirkverbindung mit der weiteren Behälterhalterung (16) ist;
wobei vorzugsweise die Verarbeitungseinrichtung (37) ferner dazu konfiguriert ist:
- einen elektrischen Betriebsparameter, vorzugsweise eine Stromaufnahme und/oder eine elektrische Leistung, der weiteren elektrischen Antriebseinheit (22) zu überwachen, vorzugsweise während eines Betätigens der weiteren Behälterhalterung (16); und
- einen Zustand der weiteren Behälterhalterung (16) in Abhängigkeit von dem überwachten elektrischen Betriebsparameter der weiteren elektrischen Antriebseinheit (22) zu ermitteln.

9. Vorrichtung (10; 64) nach Anspruch 8, wobei:
die Verarbeitungseinrichtung (37) ferner dazu konfiguriert ist:
- den Zustand der Behälterhalterung (14) und/oder den Zustand der weiteren Behälterhalterung (16) in Abhängigkeit von einem Vergleich zwischen dem überwachten elektrischen Betriebsparameter der elektrischen Antriebseinheit (20) und dem überwachten elektrischen Betriebsparameter der weiteren elektrischen Antriebseinheit (20) zu ermitteln.

10. Vorrichtung (64) nach einem der vorhergehenden Ansprüche, wobei:
die Vorrichtung (64) als ein Förderer, vorzugsweise ein drehbarer Klammerstern, ausgeführt ist, vorzugsweise mit einem Schleifringübertrager (68), der mit der elektrischen Antriebseinheit (20) elektrisch verbunden ist; und
die Verarbeitungseinrichtung (37) dazu konfiguriert ist, den Förderer anzuhalten, wenn der ermittelte Zustand der Behälterhalterung (14) einen Defekt der Behälterhalterung (14) oder einen bevorstehenden Defekt angibt.

11. Vorrichtung (10; 64) nach Anspruch 10, wobei die Verarbeitungseinrichtung (37) ferner dazu konfiguriert ist:
- den Förderer in Abhängigkeit von dem ermittelten Zustand der Behälterhalterung (14) zu betreiben; und/oder
- die elektrische Antriebseinheit (20) in Abhängigkeit von einer, vorzugsweise aktuellen, Leistung des Förderers zu betreiben, vorzugsweise zum Anpassen einer Haltekraft, eines Öffnungszeitpunkts, eines Schließzeitpunkts und/oder eines Verstellwegs der Behälterhalterung (14) in Abhängigkeit von der Leistung des Förderers.

12. Verfahren zum Betreiben einer Vorrichtung (10; 64) zum Transportieren von Behältern (12) für eine Behälterbehandlungsanlage, aufweisend:
Betätigen einer Behälterhalterung (14), vorzugsweise eines Klammerarmpaares, der Vorrichtung (10; 64) mittels einer elektrischen Antriebseinheit (20) der Vorrichtung (10; 64) zum Halten eines Behälters (12);
Überwachen eines elektrischen Betriebsparameters, vorzugsweise einer Stromaufnahme und/oder einer elektrischen Leistung, der elektrischen Antriebseinheit (20), vorzugsweise während des Betätigens, mittels einer Verarbeitungseinrichtung (37) der Vorrichtung (10; 64); und
Ermitteln eines Zustands der Behälterhalterung (14) in Abhängigkeit von dem Überwachen des elektrischen Betriebsparameters der elektrischen Antriebseinheit (20) mittels der Verarbeitungseinrichtung (37), **dadurch gekennzeichnet, dass**:
- der ermittelte Zustand ein Verschleißzustand und/oder ein Defekt der Behälterhalterung (14) ist; und/oder
- der ermittelte Zustand angibt, ob die Behälterhalterung (14) bei dem Betätigen einen Leerweg ohne Übernahme eines Behälters (12) ausgeführt hat.

13. Verfahren nach Anspruch 12, ferner aufweisend mindestens eines von:
Ausgeben des ermittelten Zustands mittels einer Ausgabeeinrichtung (70);
Anhalten der Vorrichtung (10; 64), wenn der ermittelte Zustand einen Defekt der Behälterhalterung (14) oder einen Verschleißzustand der Behälterhalterung (14), der eine Wartung erforderlich macht, angibt, mittels der Verarbeitungseinrichtung (37);
Betreiben der Vorrichtung in Abhängigkeit von dem ermittelten Zustand mittels der Verarbeitungseinrichtung (37);
Anpassen einer Haltekraft, eines Öffnungszeitpunkts, eines Schließzeitpunkts und/oder eines Verstellwegs der Behälterhalterung (14) mittels der Verarbeitungseinrichtung (37) in Abhängigkeit von dem überwachten elektrischen Betriebsparameter und/oder in Abhängigkeit von einer Leistung der als Förderer ausgebildeten Vorrichtung (64); und
Ermitteln eines Merkmals, vorzugweise einer Abmessung und/oder eines Gewichts, des Behälters (12) in Abhängigkeit von dem Überwachen des elektrischen Betriebsparameters der elektrischen Antriebseinheit (20) mittels der Verarbeitungseinrichtung (37).

14. Verfahren nach Anspruch 12 oder Anspruch 13, wobei:
der ermittelte Zustand angibt:
- ob die Behälterhalterung (14) den Behälter (12) hält oder übernommen hat.

## Claims

1. An apparatus (10; 64) for transporting containers (12) for a container treatment facility, comprising:
a container holder (14), preferably a pair of clamp arms, for holding a container (12);
an electric drive unit (20) which is operatively connected to the container holder (14) in order to actuate the container holder (14); and
a processing device (37) which is configured:
- to monitor an electrical operating parameter, preferably a current consumption and/or an electrical power, of the electric drive unit (20); and
- to determine a state of the container holder (14) on the basis of the monitored electrical operating parameter of the electric drive unit (20), **characterized in that:**
the determined state is a wear state of and/or a defect in the container holder (14); and/or
the determined state indicates if the container holder (14) has traveled while empty without transferring the container (12) during the actuation.

2. The apparatus (10; 64) according to claim 1, wherein:
the processing device (37) is configured:
- to monitor the electrical operating parameter of the electric drive unit (20) during actuation of the container holder (14) by the electric drive unit (20); and
- to determine the state of the container holder (14) on the basis of the electrical operating parameter of the electric drive unit (20) monitored during the actuation of the container holder (14).

3. The apparatus (10; 64) according to either of the preceding claims, wherein:
the determined state indicates:
- whether the container holder (14) is holding the container (12) or has transferred it.

4. The apparatus (10; 64) according to any of the preceding claims, wherein:
the processing device (37) is further configured to determine a characteristic, preferably a dimension and/or a weight, of the container (12) on the basis of the monitored electrical operating parameter of the electric drive unit (20).

5. The apparatus (10; 64) according to any of the preceding claims, further comprising:
an output device (70) for outputting information to a user,
wherein the processing device (37) is further configured to control the output device (70) such as to output information indicating the determined state.

6. The apparatus (10; 64) according to any of the preceding claims, wherein:
the processing device (37) is further configured to operate the electric drive unit (20) on the basis of the determined state.

7. The apparatus (10; 64) according to any of the preceding claims, wherein:
a holding force, an opening instant, a closing instant and/or an adjustment path of the container holder (14) can be variably adjusted by the electric drive unit (20), preferably automatically by the processing device (37) on the basis of the monitored electrical operating parameter; and/or
the processing device (37) is configured to operate the electric drive unit (20) in different modes, wherein preferably:
- the different modes differ at least partially with respect to a holding force, an opening instant, a closing instant and/or an adjustment path of the container holder (14); and/or
- the different modes are configured for holding different containers (12), wherein the different containers (12) differ with respect to container weight, container size, container shape, container diameter and/or container material.

8. The apparatus (10; 64) according to any of the preceding claims, further comprising:
a further container holder (16), preferably a further pair of clamp arms, wherein the container holder (14) and the further container holder (16) are arranged one above the other in order to simultaneously hold the container (12);
a further electric drive unit (22) which is operatively connected to the further container holder (16) in order to actuate the further container holder (16),
wherein preferably the processing device (37) is further configured:
- to monitor an electrical operating parameter, preferably a current consumption and/or an electrical power, of the further electric drive unit (22), preferably during actuation of the further container holder (16); and
- to determine a state of the further container holder (16) on the basis of the monitored electrical operating parameter of the further electric drive unit (22).

9. The apparatus (10; 64) according to claim 8, wherein:
the processing device (37) is further configured:
- to determine the state of the container holder (14) and/or the state of the further container holder (16) on the basis of a comparison between the monitored electrical operating parameter of the electric drive unit (20) and the monitored electrical operating parameter of the further electric drive unit (20).

10. The apparatus (64) according to any of the preceding claims, wherein:
the apparatus (64) is in the form of a conveyor, preferably a rotatable clamp star, preferably comprising a slip ring transmitter (68) which is electrically connected to the electric drive unit (20); and
the processing device (37) is configured to stop the conveyor if the determined state of the container holder (14) indicates a defect in the container holder (14) or an impending defect.

11. The apparatus (10; 64) according to claim 10, wherein the processing device (37) is further configured:
- to operate the conveyor on the basis of the determined state of the container holder (14); and/or
- to operate the electric drive unit (20) on the basis of a, preferably current, power of the conveyor, preferably for adjusting a holding force, an opening instant, a closing instant and/or an adjustment path of the container holder (14) on the basis of the power of the conveyor.

12. A method for operating an apparatus (10; 64) for transporting containers (12) for a container treatment facility, comprising:
an electric drive unit (20) of the apparatus (10; 64) for holding a container (12) actuating a container holder (14), preferably a pair of clamp arms, of the apparatus (10; 64);
a processing device (37) of the apparatus (10; 64) monitoring an electrical operating parameter, preferably a current consumption and/or an electrical power, of the electric drive unit (20), preferably during the actuation; and
the processing device (37) determining a state of the container holder (14) on the basis of the monitoring of the electrical operating parameter of the electric drive unit (20), **characterized in that:**
- the determined state is a wear state of and/or a defect in the container holder (14); and/or
- the determined state indicates if the container holder (14) has traveled while empty without transferring a container (12) during the actuation.

13. The method according to claim 12, further comprising at least one of:
an output device (70) outputting the determined state;
the processing device (37) stopping the apparatus (10; 64) if the determined state indicates a defect in the container holder (14) or a wear state of the container holder (14) that requires maintenance;
the processing device (37) operating the apparatus on the basis of the determined state;
the processing device (37) adjusting a holding force, an opening instant, a closing instant and/or an adjustment path of the container holder (14) on the basis of the monitored electrical operating parameter and/or on the basis of a power of the apparatus (64) in the form of a conveyor; and
the processing device (37) determining a characteristic, preferably a dimension and/or a weight, of the container (12) on the basis of the monitoring of the electrical operating parameter of the electric drive unit (20).

14. The method according to either claim 12 or claim 13, wherein:
the determined state indicates:
- whether the container holder (14) is holding the container (12) or has transferred it.

## Revendications

1. Dispositif (10 ; 64) destiné au transport de récipients (12) pour une installation de traitement de récipients, présentant :
un moyen de maintien pour récipient (14), de préférence une paire de bras de serrage, pour le maintien d'un récipient (12) ;
une unité d'entraînement électrique (20) qui est en liaison fonctionnelle avec le moyen de maintien pour récipient (14) pour actionner le moyen de maintien pour récipient (14) ; et
un appareil de traitement (37) qui est configuré pour :
- surveiller un paramètre de fonctionnement électrique, de préférence une consommation de courant et/ou une puissance électrique, de l'unité d'entraînement électrique (20) ; et
- déterminer un état du moyen de maintien pour récipient (14) en fonction du paramètre de fonctionnement électrique surveillé de l'unité d'entraînement électrique (20), **caractérisé en ce que** :
l'état déterminé est un état d'usure et/ou un défaut du moyen de maintien pour récipient (14) ; et/ou
l'état déterminé indique si le moyen de maintien pour récipient (14) a effectué une course à vide sans prise en charge du récipient (12) lors de l'actionnement.

2. Dispositif (10 ; 64) selon la revendication 1, dans lequel :
l'appareil de traitement (37) est configuré pour :
- surveiller le paramètre de fonctionnement électrique de l'unité d'entraînement électrique (20) pendant un actionnement du moyen de maintien pour récipient (14) au moyen de l'unité d'entraînement électrique (20) ; et
- déterminer l'état du moyen de maintien pour récipient (14) en fonction du paramètre de fonctionnement électrique de l'unité d'entraînement électrique (20) surveillé pendant l'actionnement du moyen de maintien pour récipient (14).

3. Dispositif (10 ; 64) selon l'une des revendications précédentes, dans lequel :
l'état déterminé indique :
- si le moyen de maintien pour récipient (14) maintient ou a pris en charge le récipient (12).

4. Dispositif (10 ; 64) selon l'une des revendications précédentes, dans lequel :
l'appareil de traitement (37) est en outre configuré pour déterminer une caractéristique, de préférence une dimension et/ou un poids, du récipient (12) en fonction du paramètre de fonctionnement électrique surveillé de l'unité d'entraînement électrique (20).

5. Dispositif (10 ; 64) selon l'une des revendications précédentes, présentant en outre :
un appareil de sortie (70) permettant de délivrer en sortie des informations à un utilisateur,
dans lequel l'appareil de traitement (37) est en outre configuré pour commander l'appareil de sortie (70) afin de délivrer en sortie des informations indiquant l'état déterminé.

6. Dispositif (10 ; 64) selon l'une des revendications précédentes, dans lequel :
l'appareil de traitement (37) est en outre configuré pour faire fonctionner l'unité d'entraînement électrique (20) en fonction de l'état déterminé.

7. Dispositif (10 ; 64) selon l'une des revendications précédentes, dans lequel :
une force de maintien, un moment d'ouverture, un moment de fermeture et/ou une course de réglage du moyen de maintien pour récipient (14) sont réglables de manière variable au moyen de l'unité d'entraînement électrique (20), de préférence automatiquement au moyen de l'appareil de traitement (37) en fonction du paramètre de fonctionnement électrique surveillé ; et/ou
l'appareil de traitement (37) est configuré pour faire fonctionner l'unité d'entraînement électrique (20) dans différents modes, dans lequel, de préférence :
- les différents modes diffèrent au moins partiellement en ce qui concerne une force de maintien, un moment d'ouverture, un moment de fermeture et/ou une course de réglage du moyen de maintien pour récipient (14) ; et/ou
- les différents modes sont configurés pour maintenir différents récipients (12), dans lequel les différents récipients (12) diffèrent en ce qui concerne un poids de récipient, une taille de récipient, une forme de récipient, un diamètre de récipient et/ou un matériau de récipient.

8. Dispositif (10 ; 64) selon l'une des revendications précédentes, présentant en outre :
un autre moyen de maintien pour récipient (16), de préférence une autre paire de bras de serrage, dans lequel le moyen de maintien pour récipient (14) et l'autre moyen de maintien pour récipient (16) sont disposés l'un sur l'autre pour maintenir le récipient (12) en même temps ;
une autre unité d'entraînement électrique (22) qui est en liaison fonctionnelle avec l'autre moyen de maintien pour récipient (16) pour l'actionnement de l'autre moyen de maintien pour récipient (16) ;
dans lequel, de préférence, l'appareil de traitement (37) est en outre configuré pour :
- surveiller un paramètre de fonctionnement électrique, de préférence une consommation de courant et/ou une puissance électrique, de l'autre unité d'entraînement électrique (22), de préférence pendant un actionnement de l'autre moyen de maintien pour récipient (16) ; et
- déterminer un état de l'autre moyen de maintien pour récipient (16) en fonction du paramètre de fonctionnement électrique surveillé de l'autre unité d'entraînement électrique (22).

9. Dispositif (10 ; 64) selon la revendication 8, dans lequel :
l'appareil de traitement (37) est en outre configuré pour :
- déterminer l'état du moyen de maintien pour récipient (14) et/ou l'état de l'autre moyen de maintien pour récipient (16) en fonction d'une comparaison entre le paramètre de fonctionnement électrique surveillé de l'unité d'entraînement électrique (20) et le paramètre de fonctionnement électrique surveillé de l'autre unité d'entraînement électrique (20).

10. Dispositif (64) selon l'une des revendications précédentes, dans lequel :
le dispositif (64) est réalisé sous la forme d'un transporteur, de préférence d'une étoile à pinces rotative, de préférence comportant un transformateur à bague collectrice (68) qui est connecté électriquement à l'unité d'entraînement électrique (20) ; et
l'appareil de traitement (37) est configuré pour arrêter le transporteur lorsque l'état déterminé du moyen de maintien pour récipient (14) indique un défaut du moyen de maintien pour récipient (14) ou un défaut imminent.

11. Dispositif (10 ; 64) selon la revendication 10, dans lequel l'appareil de traitement (37) est en outre configuré pour :
- faire fonctionner le transporteur en fonction de l'état déterminé du moyen de maintien pour récipient (14) ; et/ou
- faire fonctionner l'unité d'entraînement électrique (20) en fonction d'une puissance, de préférence actuelle, du transporteur, de préférence pour adapter une force de maintien, un moment d'ouverture, un moment de fermeture et/ou une course de réglage du moyen de maintien pour récipient (14) en fonction de la puissance du transporteur.

12. Procédé permettant de faire fonctionner un dispositif (10 ; 64) pour le transport de récipients (12) pour une installation de traitement de récipients, présentant :
l'actionnement d'un moyen de maintien pour récipient (14), de préférence d'une paire de bras de serrage, du dispositif (10 ; 64) au moyen d'une unité d'entraînement électrique (20) du dispositif (10 ; 64) pour le maintien d'un récipient (12) ;
la surveillance d'un paramètre de fonctionnement électrique, de préférence d'une consommation de courant et/ou d'une puissance électrique, de l'unité d'entraînement électrique (20), de préférence pendant l'actionnement, au moyen d'un appareil de traitement (37) du dispositif (10 ; 64) ; et
la détermination d'un état du moyen de maintien pour récipient (14) en fonction de la surveillance du paramètre de fonctionnement électrique de l'unité d'entraînement électrique (20) au moyen de l'appareil de traitement (37), **caractérisé en ce que :**
- l'état déterminé est un état d'usure et/ou un défaut du moyen de maintien pour récipient (14) ; et/ou
- l'état déterminé indique si le moyen de maintien pour récipient (14) a effectué une course à vide sans prise en charge d'un récipient (12) lors de l'actionnement.

13. Procédé selon la revendication 12, présentant en outre au moins l'un des éléments suivants :
sortie de l'état déterminé au moyen d'un appareil de sortie (70) ;
arrêt du dispositif (10 ; 64) lorsque l'état déterminé indique un défaut du moyen de maintien pour récipient (14) ou un état d'usure du moyen de maintien pour récipient (14) nécessitant un entretien au moyen de l'appareil de traitement (37) ;
faire fonctionner le dispositif en fonction de l'état déterminé au moyen de l'appareil de traitement (37) ;
adapter une force de maintien, un moment d'ouverture, un moment de fermeture et/ou une course de réglage du moyen de maintien pour récipient (14) au moyen de l'appareil de traitement (37) en fonction du paramètre de fonctionnement électrique surveillé et/ou en fonction d'une puissance du dispositif (64) réalisé en tant que transporteur ; et
déterminer une caractéristique, de préférence une dimension et/ou un poids, du récipient (12) en fonction de la surveillance du paramètre de fonctionnement électrique de l'unité d'entraînement électrique (20) au moyen de l'appareil de traitement (37).

14. Procédé selon la revendication 12 ou la revendication 13, dans lequel :
l'état déterminé indique :
- si le moyen de maintien pour récipient (14) maintient ou a pris en charge le récipient (12).
